# EUROPÄISCHE PATENTSCHRIFT

(11) **EP 4 275 874 B1**
(45) Veröffentlichungstag und Bekanntmachung des Hinweises auf die Patenterteilung: **29.04.2026**
(21) Anmeldenummer: 22172515.3
(22) Anmeldetag: 10.05.2022
(51) Int. Cl.: B29D 11/00, B65G 47/82, B65G 47/51, B24B 13/00

(54) **ANLAGE UND VERFAHREN ZUM BEARBEITEN OPHTHALMISCHER LINSEN SOWIE VERWENDUNG EINER SCHIEBEEINRICHTUNG**
APPARATUS AND METHOD FOR PROCESSING OPHTHALMIC LENSES AND USE OF A SLIDING DEVICE
INSTALLATION ET PROCÉDÉ PERMETTANT DE TRAITER DES LENTILLES OPHTALMIQUES, AINSI QU'UTILISATION D'UN DISPOSITIF DE POUSSÉE

(43) Veröffentlichungstag der Anmeldung: 15.11.2023
(73) Patentinhaber: Schneider GmbH & Co. KG, 35112 Fronhausen (DE)
(72) Erfinder: Buchenauer, Helwig, 35232 Dautphetal-Buchenau (DE); Schneider, Gunter, 35037 Marburg (DE)
(74) Vertreter: Von Rohr Patentanwälte Partnerschaft mbB

(56) Entgegenhaltungen:
- DE-A1- 102007 059 303
- DE-A1- 102018 007 494

## Beschreibung

Die vorliegende Erfindung betrifft eine Anlage zum Bearbeiten ophthalmischer Linsen gemäß dem Oberbegriff des Anspruchs 1, ein Verfahren zum Bearbeiten ophthalmischer Linsen gemäß dem Oberbegriff des Anspruchs 7 sowie eine Verwendung einer Schiebeeinrichtung gemäß dem Oberbegriff des Anspruchs 14.

Die Bearbeitung von ophthalmischen Linsen, insbesondere von Brillengläsern, erfolgt in mehreren separaten Bearbeitungseinrichtungen. Die Bearbeitung kann insbesondere eine formgebende, vorzugweise spanende, Bearbeitung, ein Polieren, ein Prüfen bzw. Messen, ein Markieren, ein Reinigen und/oder ein Beschichten umfassen.

Zur Verkettung der Bearbeitungseinrichtungen werden für eine serielle Bearbeitung üblicherweise Fördersysteme mit Förderbändern, wie Band- und Gurtförderern, verwendet, welche die ophthalmischen Linsen bzw. mit ophthalmischen Linsen beladene Linsenträger von einer Bearbeitungseinrichtung zur anderen transportieren.

Die den Ausgangpunkt bildende WO 2013/131656 A2 offenbart eine Anlage zum Bearbeiten optischer Linsen für Brillen in mehreren separaten Bearbeitungseinrichtungen. Jede Bearbeitungseinrichtung weist ein eigenes Förderband zur Förderung von Linsenträgern zu und von der Bearbeitungseinrichtung auf. Zur weiteren Förderung der Linsenträger dient ein Transfersystem mit einer ersten Transportspur zur Förderung der Linsenträger von einer Bearbeitungseinrichtung zur nächsten sowie mit einer zweiten parallelen Transportspur zur parallelen Förderung von Linsenträgern. Ferner weist das Transfersystem zwischen den Bearbeitungseinrichtungen jeweils angeordnete Transfereinrichtungen zum Wechsel zwischen den Transportspuren, auf. Die erste Transportspur verläuft durch die Bearbeitungseinrichtungen und setzt sich aus den Transfereinrichtungen und den Förderbändern der Bearbeitungseinrichtungen zusammen, wobei die Transfereinrichtungen und diese Förderbänder jeweils unabhängig steuer- und antreibbar sind. Die Transfereinrichtungen umfassen Hubeinrichtungen in der ersten und zweiten Transportspur, ein Querförderband und ein Förderband in Längsrichtung. Dementsprechend ergibt sich ein komplexer Aufbau für die Anlage, das Transfersystem und die Querförderung.

Die DE 10 2018 007 494 A1 offenbart ein integriertes, sehr kompaktes Bearbeitungssystem zur Bearbeitung von Brillengläsern mit mehreren Bearbeitungsstationen und einem gemeinsamen Transportsystem mit gemeinsamen Manipulationseinrichtungen zur Beschickung der verschiedenen Arbeitsstationen mit zu bearbeitenden Brillengläsern. Es handelt sich also um ein sehr kompaktes Bearbeitungssystem, das jedoch nicht auf eine flexible Verkettung von separaten Bearbeitungseinrichtungen gerichtet ist.

Die US 2017/0144842 A1 offenbart eine Anlage zum Zirkulieren und Sortieren von Kontaktlinsen, wobei die Kontaktlinsen jeweils in einem blockförmigen Halter gehalten sind und die Halter durch Schiebezylinder verschoben werden.

Die DE 10 2007 059 303 A1 offenbart eine Verarbeitungsanlage zum Transport von Werkstücken zu Bearbeitungsstationen. Die Verarbeitungsanlage weist ein Förderband mit einer Transportspur und einer Überholspur auf. Die Überholspur ist von der Transportspur über Leitstege getrennt. In vorgesehenen Abschnitten weisen die Leitstege Durchbrüche auf. Im Bereich der Durchbrüche ist jeweils ein Schieber vorgesehen, um ein Werkstück von der Transportspur auf die Überholspur oder umgekehrt zu schieben.

Der vorliegenden Erfindung liegt die Aufgabe zugrunde, eine Anlage und ein Verfahren zum Bearbeiten ophthalmischer Linsen anzugeben, wobei bei einem einfachen, kostengünstigen Aufbau eine flexible Verkettung von separaten Bearbeitungseinrichtungen ermöglicht wird.

Die obige Aufgabe wird durch eine Anlage gemäß Anspruch 1, ein Verfahren gemäß Anspruch 7 oder eine Verwendung gemäß Anspruch 14 gelöst. Vorteilhafte Weiterbildungen sind Gegenstand der Unteransprüche.

Die vorschlagsgemäße Anlage weist mehrere separate Bearbeitungseinrichtungen zur unabhängigen Bearbeitung ophthalmischer Linsen, insbesondere von Linsen für Brillen, auf.

Ein erster Aspekt der vorliegenden Erfindung liegt darin, dass die Fördereinrichtung vorzugsweise eine durchgehende erste Transportspur vor den separaten, jeweils ein eigenes Gehäuse aufweisenden Bearbeitungseinrichtungen bildet, wobei die Bearbeitungseinrichtungen jeweils eine eigene Manipulationseinrichtung aufweisen, um Linsen von der ersten Transportspur zur Bearbeitung aufzunehmen.

Besonders bevorzugt verläuft die erste Transportspur geradlinig, wobei die Bearbeitungseinrichtungen vorzugsweise längs der ersten Transportspur insbesondere nur an einer Seite angeordnet sind.

Besonders bevorzugt erfolgt die Förderung entlang der ersten Transportspur zur bedarfsgerechten Bereitstellung der zu bearbeitenden Linsen bzw. Linsenträger mit den zu bearbeitenden Linsen ausschließlich durch die (gemeinsame) Fördereinrichtung, insbesondere also zentral gesteuert, während die Aufnahme der zu bearbeitenden Linsen durch die jeweilige Manipulationseinrichtung der jeweiligen Bearbeitungseinrichtung individuell durch die jeweilige Bearbeitungseinrichtung erfolgt, also "lokal" bzw. dezentral gesteuert wird.

Besonders bevorzugt erfolgt die Förderung durch ein Förderband oder durch mehrere Förderbänder, wobei das Förderband bzw. die Förderbänder vorzugsweise kontinuierlich betrieben und die Linsenträger individuell durch entsprechende Stoppeinrichtungen angehalten bzw. gestoppt werden. Diese Stoppeinrichtungen sind vorzugsweise wiederum der Fördereinrichtung zugeordnet und/oder werden von dieser bzw. zentral gesteuert.

Dementsprechend wird die Verkettung von mehreren unabhängigen Bearbeitungseinrichtungen - insbesondere eine Ergänzung und Anpassung - besonders einfach realisierbar, da die jeweils benötigte Bearbeitungseinrichtung nur entlang der ersten Transportspur angeordnet werden muss, jedoch keine weitergehende mechanische Integration in die (gemeinsame) Fördereinrichtung erfolgen muss. Dementsprechend ergibt sich eine sehr kostengünstige und universell anpassbare Anlage zur Bearbeitung ophthalmischer Linsen.

Ein zweiter, auch unabhängig realisierbarer Aspekt der vorliegenden Erfindung liegt darin, dass mindestens eine Transfereinrichtung, insbesondere mehrere Transfereinrichtungen oder jede Transfereinrichtung als Schiebeeinrichtung ausgebildet ist bzw. sind, wobei die Schiebeeinrichtung dazu ausgebildet ist, den jeweiligen Linsenträger zum Wechsel der Transportspur quer zur Fördereinrichtung von einer Transportspur zur anderen zu schieben und/oder zu ziehen und vorzugsweise optional in einer Zwischenposition zu positionieren.

Beim Verschieben bzw. Spurwechsel wird der Linsenträger vorzugsweise sowohl in Fördereinrichtung als auch quer dazu bzw. seitlich geführt.

Besonders bevorzugt werden die Linsenträger zum Wechsel der Transportspur und/oder in eine Zwischenposition - vorzugsweise ausschließlich - durch primär seitliche Krafteinwirkung ohne aktives Anheben bewegt bzw. geschoben oder gezogen.

Insbesondere kann das die erste und/oder zweite Transportspur bildende Förderband kontinuierlich durchlaufen, während ein sicherer Spurwechsel auf konstruktiv einfache Weise ermöglicht bzw. sichergestellt wird.

Dementsprechend wird eine einfache und kostengünstige Realisierung der Anlage und des Verfahrens ermöglicht.

Ein dritter, auch unabhängig realisierbarer Aspekt der vorliegenden Erfindung sieht vor, dass die Fördereinrichtung vorzugsweise ein gemeinsames Förderband mit zwei Transportspuren und einem dazwischen angeordneten Zwischenbereich für die Linsenträger aufweist, sodass mindestens ein Linsenträger bedarfsweise zwischen den Transportspuren auf dem Förderband positioniert werden kann.

Vorzugsweise wird der Linsenträger in dem Zwischenbereich insbesondere von einer von oben herabragenden Stoppeinrichtung o. dgl. gehalten, sodass das Förderband kontinuierlich weiterlaufen kann, auch wenn der Linsenträger in dem Zwischenbereich in einer Zwischenposition temporär verbleibt bzw. gehalten wird.

Alternativ oder ergänzend kann auch die Schiebeeinrichtung zum Wechsel der Transportspuren den Linsenträger bedarfsweise in dem Zwischenbereich bzw. in der Zwischenposition halten.

Durch das gemeinsame Förderband mit Zwischenbereich wird eine besonders einfache und damit kostengünstige Realisierung ermöglicht, die auch sehr leicht an verschiedene Gegebenheiten und Anforderungen angepasst werden kann.

Die Bearbeitungseinrichtungen sind vorzugsweise an einer durchgehenden Fördereinrichtung bzw. einem durchgehenden Förderband positioniert. Die Fördereinrichtung dient dazu, die ophthalmischen Linsen insbesondere auf Linsenträgern den einzelnen Bearbeitungseinrichtungen zu- bzw. von diesen wegzuführen.

Vorzugsweise weist die durchgehende Fördereinrichtung zwei Transportspuren auf, insbesondere damit eine unabhängige parallele Bearbeitung der ophthalmischen Linsen in den separaten Bearbeitungseinrichtungen möglich ist. Die erste Transportspur dient dabei insbesondere dem Transport der ophthalmischen Linsen bzw. Linsenträger von einer Bearbeitungseinrichtung zur nächsten und die zweite Transportspur zur parallelen Förderung, insbesondere als Überholspur, auf der die ophthalmischen Linsen bzw. Linsenträger, welcher einer Bearbeitungseinrichtung nicht zugeführt werden sollen bzw. können, weitertransportiert werden.

Vorzugsweise die Fördereinrichtung mindestens ein durchgehendes Förderband und mindestens ein Antriebssystem auf, wobei die Fördereinrichtung nun in Bezug auf die Förderrichtung durchgehend und nicht aus separaten Untereinheiten zusammengesetzt ist.

Vorzugsweise ist nur noch eine durchgehende Fördereinrichtung für beide Transportspuren, besonders bevorzugt mit nur noch einem durchgehenden Förderband vorgesehen. Damit einhergehend sind insbesondere wesentlich weniger Antriebssysteme, besonders bevorzugt nur ein Antriebssystem, zum Betrieb der Fördereinrichtung erforderlich. Dies gestattet einen wesentlich geringeren Steuer- und Montageaufwand.

Vorzugsweise ist jede Bearbeitungseinrichtung zu der ersten Transportspur unmittelbar benachbart ist, d.h. die erste Transportspur läuft vorzugsweise direkt an den Bearbeitungseinrichtungen vorbei und nicht durch die Bearbeitungseinrichtungen hindurch.

Unter dem Ausdruck "unmittelbar benachbart" ist im Sinne der vorliegenden Erfindung daher vorrangig zu verstehen, dass die erste Transportspur direkt an den Bearbeitungseinrichtungen vorbei und nicht durch die Bearbeitungseinrichtungen hindurchläuft.

Vorzugsweise sind die Bearbeitungseinrichtungen direkt bzw. unmittelbar, insbesondere im Wesentlichen abstands- bzw. lückenlos, an der ersten Transportspur positioniert. Dies ermöglicht einfachere Wartungsarbeiten sowie eine unaufwändigere Montage bzw. Erweiterung der Anlage um weitere Bearbeitungseinrichtungen, da diese nun nur noch direkt an die Fördereinrichtung bzw. Transportspur herangeschoben und angeschlossen werden müssen.

Vorzugsweise ist daher unter dem Begriff "unmittelbar benachbart" weiterhin zu verstehen, dass die Bearbeitungseinrichtungen und die Transportspur bzw. die Fördereinrichtung direkt aneinandergrenzen, insbesondere zumindest im Wesentlichen abstands- bzw. lückenlos.

Optional können die Bearbeitungseinrichtungen jedoch auch zur Fördereinrichtung, insbesondere zur ersten Transportspur, beabstandet sein. Der Abstand ist vorzugsweise limitiert durch die Reichweite der jeweiligen Manipulationseinrichtung zum Be- und Entladen der Bearbeitungseinrichtungen.

Für die vorschlagsgemäße Anlage und das vorschlagsgemäße Verfahren sind grundsätzlich alle bekannten Linsenträger geeignet. Die gebräuchlichsten Linsenträger verfügen in an sich bekannter Weise über zwei Aufnahmeplätze zur Aufnahme von bis zu zwei ophthalmischen Linsen, wie es bei der Linsen- bzw. Brillenglasfertigung üblich ist. Die Aufnahmeplätze der Linsenträger dienen dazu, die ophthalmischen Linsen derart vorzupositionieren, dass das Beladen der Bearbeitungseinrichtungen besonders zuverlässig erfolgen kann. Dabei können die ophthalmischen Linsen den Linsenträgern auch einzeln entnommen werden.

Der Abstand der Aufnahmeplätze für die ophthalmischen Linsen innerhalb eines Linsenträgers ist vorzugsweise genauso groß wie der Abstand eines Aufnahmeplatzes in einem Linsenträger zu dem benachbarten Aufnahmeplatz in einem unmittelbar benachbarten Linsenträger. Dies vereinfacht die Handhabung bzw. Positionierung der ophthalmischen Linsen, insbesondere im Haltebereich der Bearbeitungseinrichtungen zum Be- und Entladen der Bearbeitungseinrichtungen mit ophthalmischen Linsen.

Zum Transport bzw. Wechsel der ophthalmischen Linsen bzw. Linsenträger von einer Transportspur zur anderen sind Transfereinrichtungen notwendig.

Gemäß einem besonders bevorzugten, auch unabhängig realisierbaren Aspekt der vorliegenden Erfindung ist jede Transfereinrichtung als Schiebeeinrichtung ausgebildet, die die ophthalmischen Linsen bzw. Linsenträger, insbesondere quer zur Förderrichtung, von einer Transportspur zur anderen zieht bzw. schiebt, wie bereits erwähnt.

Die Förderung der ophthalmischen Linsen bzw. Linsenträger mittels der Schiebeeinrichtung von einer Transportspur zur anderen erfolgt vorzugsweise quer zur Förderrichtung, besonders bevorzugt auf dem kürzesten Weg, d.h. in einem annähernd rechten Winkel relativ zur Förderrichtung. Eine Querförderung kann jedoch auch in anderen Winkeln in Bezug auf die Förderrichtung erfolgen. Insbesondere kann eine Diagonalförderung in Bezug auf die Förderrichtung, vorzugsweise sowohl entlang als auch entgegen der Förderrichtung, erfolgen. Die Querförderung der Linsenträger durch die Schiebeeinrichtungen erfolgt insbesondere derart, dass die Linsenträger jeweils besonders zuverlässig und möglichst zügig von einer Transportspur zur anderen gefördert werden.

Insbesondere ermöglicht die Schiebeeinrichtung eine Querförderung bei laufendem Förderband bzw. eine Querförderung ohne Hub. Mit anderen Worten ist ein einfacherer und schnellerer Transfer möglich.

Vorzugsweise sind Förderbänder mit einer besonders glatten Oberfläche, insbesondere ohne Absätze und Unebenheiten, besonders bevorzugt Gliederbänder mit glatter Oberfläche, vorgesehen. Ein Vorteil der Förderbänder in Form von durchgehenden Gliederbändern besteht darin, dass die Linsenträger nicht passgenau auf einer Transportspur fahren müssen, sondern dass Linsenträger unterschiedlicher Abmessungen gefördert werden können. So ist es beispielsweise möglich, Linsenträger mit verschiedenen Breiten auf einem Förderband zu fördern, vorausgesetzt, dass der Linsenträger nicht breiter als die jeweilige Transportspur ist.

Nach einer erfolgten Bearbeitung von ophthalmischen Linsen an einer Bearbeitungseinrichtung können die ophthalmischen Linsen auf ihren Aufnahmeplätzen des jeweiligen Linsenträgers auf der ersten Transportspur abgelegt und an eine der jeweiligen Bearbeitungseinrichtung nachgeordnete Schiebeeinrichtung befördert werden. Falls nun eine Bearbeitung der ophthalmischen Linsen nicht an der nächstliegenden, sondern an einer weiter entfernten Bearbeitungseinrichtung erwünscht ist, wird der Linsenträger mit den bearbeiteten ophthalmischen Linsen mittels der Schiebeeinrichtung von der ersten zur zweiten Transportspur quer zur Förderrichtung geschoben, damit ein Überholen der in Förderrichtung nächstliegenden Bearbeitungseinrichtung auf der zweiten Transportspur ermöglicht wird. Die nun auf der zweiten Transportspur befindlichen zu bearbeitenden ophthalmischen Linsen bzw. der Linsenträger können, sobald sie zu einer Schiebeeinrichtung gelangen, die sich vor der Bearbeitungseinrichtung befindet, an der die nächste Bearbeitung erfolgen soll, mittels der Schiebeeinrichtung von der zweiten Transportspur zur ersten quer zur Förderrichtung geschoben werden.

Für den Fall, dass ein Anhalten der Linsenträger, bspw. bei einem hohen Aufkommen an Linsenträgern, im Haltebereich vor den Bearbeitungseinrichtungen oder vor einer Schiebeeinrichtung notwendig bzw. erwünscht ist, insbesondere zum Vermeiden einer Kollision an Linsenträgern, sind Stoppeinrichtungen an den Transportspuren vorgesehen, insbesondere derart, dass die Fördereinrichtung bzw. deren Förderband oder Förderbänder weiterhin kontinuierlich betrieben werden kann bzw. können.

Gemäß einem besonders bevorzugten, auch unabhängig realisierbaren Aspekt der vorliegenden Erfindung weist jede Schiebeeinrichtung eine insbesondere quer zur Fördereinrichtung verfahrbare Gabel auf. Diese dient insbesondere zur bedarfsweisen Mitnahme der Linsenträger von einer Transportspur zu anderen. Vorzugsweise ist die Gabel derart gestaltet bzw. die Öffnung der Gabel ist vorzugsweise entgegengesetzt zur Förderrichtung orientiert, dass die Linsenträger bei laufendem Förderband durch die bzw. unter der Gabel hindurchfahren können, insbesondere da die Linsenträger nicht zwischen den Haltearmen der Gabel eingespannt werden (s.u.). Die Gabel der Schiebeeinrichtung gewährleistet, dass nur noch eine durchgehende Fördereinrichtung und nicht separate Untereinheiten einer Transfereinrichtung zur Querförderung notwendig ist.

Ein weiterer, auch unabhängig realisierbarer Aspekt der vorliegenden Erfindung liegt darin, dass die Schiebeeinrichtung eine höhenverstellbare Gabel aufweist. Ein Vorteil dieser weiteren Ausführungsform besteht darin, dass die Linsenträger durch ein zügiges Hochfahren der Gabel bei laufendem Förderband schneller die Schiebeeinrichtung verlassen können. Dies dient insbesondere zur Vorbeugung einer Aufstauung von Linsenträgern bzw. zur Erzielung eines höheren Durchsatzes.

Im Falle einer Aufstauung von Linsenträgern, insbesondere vor einer Schiebeeinrichtung, d.h. entweder vor einer mit einem Linsenträger besetzten Gabel oder auf der gegenüberliegenden Transportspur, auf die der Linsenträger mittels der Gabel geschoben werden soll, sind zum Anhalten der Linsenträger Stoppeinrichtungen vorgesehen. Diese sind vorzugsweise derart an der Fördereinrichtung positioniert, dass sich die nachfolgenden Linsenträger bei laufendem Förderband nicht hinter einem weiteren Linsenträger aufstauen bzw. mit diesem kollidieren bzw. die Warteposition, auf die ein Linsenträger mittels der Gabel der Schiebeeinrichtung geschoben werden soll, nicht besetzt ist, bevor die Querförderung durch die Schiebeeinrichtung erfolgt ist.

Besonders bevorzugt weist die Schiebeeinrichtung einen Linearantrieb zur Querförderung der Gabel, die insbesondere die ophthalmischen Linsen bzw. Linsenträger von einer Transportspur zur anderen schiebt, auf.

Vorzugsweise ist die Gabel der Schiebeeinrichtung in beide Richtungen quer zur Förderrichtung verfahrbar. Dies erlaubt einen wesentlich geringen Material- und Montageaufwand, da nur noch eine einfach angetriebene Schiebeeinrichtung, die die ophthalmischen Linsen bzw. Linsenträger von einer Transportspur zur anderen schiebt, notwendig ist anstelle von aus mehreren jeweils separat angetriebenen Untereinheiten bestehenden Transfereinrichtungen.

Besonders bevorzugt sind die Schiebeeinrichtungen an der Fördereinrichtung, vorzugsweise zwischen zwei Bearbeitungseinrichtungen bzw. vor und/oder nach jeder Bearbeitungseinrichtung angeordnet. Dies hat den Vorteil, dass die Anordnung der Schiebeeinrichtungen unabhängig vom Standort bzw. der Position der Bearbeitungseinrichtungen ist.

Alternativ oder zusätzlich können die Schiebeeinrichtungen auch direkt an den Bearbeitungseinrichtungen angebracht sein, insbesondere auf der bzgl. der Förderrichtung für den Linsenträger zuerst erreichbaren Seite jeder Bearbeitungseinrichtung. Dies ermöglicht, dass bei Umbau der Anlage, bspw. durch Erweiterung um zusätzliche Bearbeitungseinrichtungen, keine weiteren Schiebeeinrichtungen an der Fördereinrichtung angebracht werden müssen, sondern diese direkt mit den Bearbeitungseinrichtungen an die Fördereinrichtung herangeschoben werden können.

Es ist auch denkbar, mehrere, vorzugsweise zwei, Schiebeeinrichtungen direkt hintereinander an der Fördereinrichtung oder auch an den Bearbeitungseinrichtungen anzuordnen. Dies dient vornehmlich dem Zweck, einen höheren Durchsatz sowie einen möglichst reibungslosen bzw. verzögerungsfreien Ablauf zu erzielen. Soll bspw. bei laufenden Förderbändern ein erster Linsenträger von der zweiten Transportspur auf die erste geschoben werden, damit die entsprechenden ophthalmischen Linsen des ersten Linsenträgers an einer nachfolgenden Bearbeitungseinrichtung in Bezug auf die Förderrichtung bearbeitet werden zu können, während sich auf der ersten Transportspur ein zweiter Linsenträger im Bereich vor den Schiebeeinrichtungen in Bezug auf die Förderrichtung befindet, der zunächst auf die zweite Transportspur geschoben werden muss, damit der Bereich auf der ersten Transportspur vor der Bearbeitungseinrichtung für den ersten zu bearbeitenden Linsenträger frei wird, so kann mittels einer ersten Schiebeeinrichtung der zweite Linsenträger von der ersten Transportspur auf die zweite Transportspur geschoben werden, während eine in Bezug auf die Förderrichtung nachfolgende Schiebeeinrichtung den ersten zu bearbeitenden Linsenträger von der ersten Transportspur auf die zweite schieben kann. Ebenso ist es natürlich auch denkbar, dass zwei auf einer Transportspur hintereinander geförderte Linsenträger jeweils in die Gabel der zwei hintereinander angeordneten Schiebeeinrichtungen einfahren und parallel auf die andere Transportspur geschoben werden.

Bei geringerem Aufkommen an Linsenträgern können die Linsenträger je nach gewünschter Position der Linsenträger auf der Fördereinrichtung auch separat entweder über die in Bezug auf die Förderrichtung erste oder zweite Schiebeeinrichtung von einer Transportspur zur anderen geschoben werden.

Eine mögliche Ausgestaltung der vorschlagsgemäßen Anlage sieht vor, dass die Fördereinrichtung ein Förderband mit zwei Transportspuren und einem gemeinsamen Antriebssystem aufweist. Dies geht mit einem geringen Montageaufwand und einer besonders einfachen Querförderung einher, da die beiden Transportspuren auf einem gemeinsamen Förderband laufen und die Schiebeeinrichtung bzw. deren Gabel somit nur auf einem laufenden Förderband quer zur Förderrichtung verschoben werden muss.

In einer besonders bevorzugten Ausführungsform weist die Fördereinrichtung zwei separate Förderbänder in Form von jeweils einer Transportspur und vorzugsweise einem gemeinsamen Antriebssystem auf. Vorzugsweise ist zwischen den beiden separaten Förderbändern ein Abstand vorgesehen, der einen Zwischenraum bildet. In diesen Zwischenraum können Stoppeinrichtungen und/oder verschiedene Messeinrichtungen, wie Sensoren untergebracht werden, was durch die Verlagerung nach innen zwischen die beiden Förderbänder zu einem geringeren Platz- bzw. Flächenbedarf der Anlage führt. Dadurch steht mehr Raum für die Bearbeitungseinrichtungen sowie für eine Bedienperson zur Verfügung. Zudem ist dadurch eine günstigere Anbindung der Bearbeitungseinrichtungen an die Fördereinrichtung möglich.

Es ist jedoch auch denkbar, dass die Fördereinrichtung zwei Förderbänder in Form von jeweils einer Transportspur aufweist, wobei entweder je ein Antriebssystem pro Förderband oder besonders bevorzugt ein gemeinsames Antriebssystem, insbesondere mit einem an sich bekannten Umlaufgetriebe, vorgesehen ist. Diese Ausgestaltung erlaubt den unabhängigen Betrieb der Förderbänder bzw. Transportspuren, insbesondere mit unterschiedlichen Geschwindigkeiten. Dies kann bspw. vorteilhaft sein, wenn mehrere Linsenträger auf der Überholspur an mehreren Bearbeitungseinrichtungen vorbeigeführt werden sollen, um eine Aufstauung von Linsenträgern zu vermeiden bzw. mit ophthalmischen Linsen beladene Linsenträger zügiger zu einer weiter entfernten Bearbeitungseinrichtung zu fördern und/oder einen höheren Durchsatz zu erzielen.

Die besonders bevorzugte Ausführungsform der vorschlagsgemäßen Anlage mit zwei beabstandeten Förderbändern sieht vor, dass jeder Schiebeeinrichtung eine zwischen den Förderbändern angeordnete Zwischenposition bzw. Zwischenplatte zugeordnet ist. Diese dient zur Überbrückung des Abstandes zwischen den Förderbändern, derart, dass eine Querförderung der ophthalmischen Linsen bzw. Linsenträger von einem Förderband zum anderen besonders zuverlässig erfolgen kann.

Die Zwischenposition bzw. Zwischenplatte kann ebenso zur temporären Zwischenspeicherung eines Linsenträgers, d.h. als Warteposition dienen, um bspw. einen höheren Durchsatz zu erzielen. Soll bspw. ein erster Linsenträger auf einer Transportspur überholt werden, damit ein nachfolgender zweiter Linsenträger die nachfolgende Bearbeitungseinrichtung zuerst erreichen kann, bspw. wenn diese zu diesem Zeitpunkt frei steht zur Bearbeitung der entsprechenden ophthalmischen Linsen des zweiten Linsenträgers, so kann der erste Linsenträger mittels der Gabel der Schiebeeinrichtung auf die Zwischenplatte geschoben und dort zwischengelagert werden, damit der zweite Linsenträger den ersten überholen kann.

Zweckmäßigerweise entspricht die Breite der Zwischenposition bzw. Zwischenplatte vorzugsweise mindestens der Breite eines Linsenträgers.

Ein weiterer, auch unabhängig realisierbarer Aspekt der vorliegenden Erfindung besteht darin, dass die Breite der Fördereinrichtung bzw. der Förderbänder durch die Breite des Linsenträgers determiniert ist.

Vorzugsweise entspricht die Breite einer Transportspur mindestens der Breite eines Linsenträgers. Daraus folgt, dass die Breite der Fördereinrichtung vorzugsweise mindestens der Anzahl der Transportspuren multipliziert mit der Breite des Linsenträgers entspricht.

In der zuvor erläuterten vorschlagsgemäßen Ausgestaltung mit zwei Transportspuren auf einem Förderband an einer Fördereinrichtung beträgt die Breite des Förderbandes sowie der Fördereinrichtung mindestens das Doppelte der Breite des Linsenträgers.

Im besonders bevorzugten Ausführungsbeispiel von zwei zueinander beabstandeten Förderbändern bzw. Transportspuren an einer Fördereinrichtung beträgt die Breite der Fördereinrichtung mindestens das Doppelte der Breite des Linsenträgers ergänzt um die Breite des Abstandes zwischen den Förderbändern und die Breite des jeweiligen Förderbandes entspricht mindestens der Breite des Linsenträgers.

Allgemein entspricht im Falle von mehreren, d.h. mindestens zwei Förderbändern, die Breite der Fördereinrichtung mindestens dem Produkt aus der Anzahl der Förderbänder und der Breite des Linsenträgers, insbesondere zuzüglich des jeweiligen Abstandes zwischen den Förderbändern.

Vorzugsweise weist die vorschlagsgemäße Anlage insbesondere randseitig der Förderbänder Leitstege, insbesondere zur Führung der ophthalmischen Linsen bzw. Linsenträger, parallel zur Förderrichtung auf. Dies ermöglicht eine zumindest im Wesentlichen geradlinige Führung der Linsenträger entlang der Transportspuren auf den Förderbändern bzw. verhindert, dass die Linsenträger schräg laufen bzw. von der Anlage herunterfallen können.

Im Bereich der Schiebeeinrichtungen sind im Falle von mindestens zwei beabstandeten Förderbändern vorzugsweise, insbesondere den Abmessungen der Linsenträger entsprechende, Aussparungen der Leitstege vorgesehen. Diese Ausgestaltung erlaubt eine einfache, schnelle Querförderung ohne Anheben bzw. Hub des Linsenträgers von einem Förderband zum anderen. Die Führung der Linsenträger parallel zur Förderrichtung durch die bzw. in die Gabel wird dabei insbesondere von den Seitenelementen der Gabel übernommen.

Gemäß einem weiteren Aspekt der vorliegenden Erfindung ist die vorschlagsgemäße Anlage derart ausgestaltet, dass eine Zirkulation von ophthalmischen Linsen bzw. Linsenträgern in einem Kreislauf erfolgen kann. Dies ermöglicht, dass die ophthalmischen Linsen bzw. Linsenträger die Bearbeitungseinrichtungen wiederholt bzw. in beliebiger Reihenfolge anfahren können und dass die Reihenfolge der Bearbeitungen, die Auslastung der Bearbeitungseinrichtungen sowie die Bearbeitungsabläufe variiert bzw. optimiert werden können. Dadurch kann einer Anstauung an Linsenträgern, insbesondere vor bzw. an Bearbeitungseinrichtungen, vorgebeugt werden.

Eine mögliche Ausgestaltung der Zirkulation sieht vor, dass die Fördereinrichtung der vorschlagsgemäßen Anlage zu einem Anlagensystem erweitert bzw. zusammengeschlossen ist bzw. werden kann. Dies erlaubt insbesondere eine Zirkulation bzw. eine Kreislaufförderung der ophthalmischen Linsen bzw. Linsenträger. Ein derartiges Anlagensystem kann aus einem oder mehreren, insbesondere ring- oder ellipsenartig ausgebildeten, Förderbändern mit ein oder zwei Transportspuren bestehen. Im Falle mehrerer Förderbänder können diese beabstandet zueinander sein und/oder direkt aneinandergrenzen.

Besonders bevorzugt wird die Fördereinrichtung eines derartigen Anlagensystems durch ein gemeinsames Antriebssystem angetrieben, kann jedoch auch mehrere Antriebssysteme aufweisen. Vorzugsweise sind die Bearbeitungseinrichten an den langen, zumindest im Wesentlichen geradlinigen Strecken des, vorzugsweise ellipsenartigen, Anlagensystems angeordnet, können jedoch auch an jeder anderen beliebigen Stelle, wie z.B. im Inneren oder an den kürzeren Seiten des Anlagensystems, angeordnet sein.

Gemäß einem anderen Aspekt der vorliegenden Erfindung können auch mehrere Fördereinrichtungen ein Anlagensystem bilden.

Eine bevorzugte Ausführungsform eines derartigen Anlagensystems der vorschlagsgemäßen Anlage ist eine U-förmige oder ringartige Anordnung mit zwei einander gegenüberliegenden Fördereinrichtungen, wobei vorzugsweise jeweils ein Förderband mit ein oder zwei Transportspuren oder zwei beabstandete Förderbänder in Form von jeweils einer Transportspur vorgesehen sind.

Entlang der einander gegenüberliegenden Fördereinrichtungen sind in an sich bekannter Weise vorzugsweise jeweils mehrere Bearbeitungseinrichtungen in einer Reihe angeordnet, die der ersten Transportspur vorzugsweise unmittelbar benachbart sind.

Vorzugsweise sind zur Zirkulation der ophthalmischen Linsen bzw. Linsenträger Verbindungselemente vorgesehen, bspw. Kurvenstücke oder Querverbindungsstücke, die die beiden einander gegenüberliegenden Fördereinrichtungen, insbesondere um die Ecke bzw. um die Kurve, miteinander verbinden. Die Kurvenförderung gewährleistet, dass die Ausrichtung der ophthalmischen Linsen bzw. Linsenträger bzgl. der jeweiligen Förderrichtung konstant bleibt.

Gemäß einem besonders bevorzugten Aspekt der zuvor genannten Ausgestaltung der vorschlagsgemäßen Anlage weist jede der beiden einander gegenüberliegenden Fördereinrichtungen zwei Förderbänder in Form von jeweils einer Transportspur auf, die jeweils über Schiebeeinrichtungen miteinander verbunden sind. Besonders bevorzugt sind die zweiten Transportspuren der Fördereinrichtungen jeweils über Verbindungselemente, wie Kurvenstücke bzw. Querverbindungsstücke, miteinander verbunden, um eine Kreisförderung zu gewährleisten. Die Schiebeeinrichtungen haben die Funktion, die ophthalmischen Linsen bzw. Linsenträger von einer Transportspur zur anderen zu transportieren bzw. alle ophthalmischen Linsen bzw. Linsenträger, die von einer Fördereinrichtung auf die gegenüberliegende befördert werden sollen, auf die zweite Transportspur zu schieben.

Gemäß einem weiteren Aspekt der vorliegenden Erfindung weist die vorschlagsgemäße Anlage mehr als zwei Transportspuren, besonders bevorzugt eine dritte Transportspur zur parallelen Förderung, insbesondere Rückförderung, von ophthalmischen Linsen bzw. Linsenträgern auf.

Vorzugsweise weisen die erste und zweite Transportspur gegenüber der dritten Transportspur entgegengesetzte Förderrichtungen auf.

Eine bevorzugte Ausgestaltung der vorschlagsgemäßen Anlage sieht vor, dass die erste und zweite Transportspur in eine Richtung verlaufen und parallel dazu eine dritte Transportspur mit entgegengesetzter Förderrichtung verläuft. Die dritte Transportspur dient dabei zum Rückfördern der ophthalmischen Linsen bzw. Linsenträger. Vorzugsweise sind daher mehrere Bearbeitungseinrichtungen entlang der ersten Transportspur angeordnet, während die dritte Transportspur lediglich der Rückförderung dient.

Gemäß einem besonders bevorzugten Aspekt der zuvor genannten Ausgestaltung der vorliegenden Erfindung ist für alle drei Transportspuren auf jeweils einem Förderband auf einer gemeinsamen Fördereinrichtung nur ein gemeinsames Antriebssystem vorgesehen. Die Umkehr der Förderrichtungen bzw. der Antrieb der dritten Transportspur erfolgt dabei bspw. in an sich bekannter Weise durch ein Umlaufgetriebe.

Weiter sind zum Transportspurenwechsel vorzugsweise quer zur Förderrichtung, insbesondere zwischen den Bearbeitungseinrichtungen, angeordnete Schiebeeinrichtungen vorgesehen, die die ophthalmischen Linsen bzw. Linsenträger über zwei bzw. drei Transportspuren schieben können. Die über drei Transportspuren laufenden Schiebeeinrichtungen erlauben eine Zirkulation bzw. Kreisförderung der ophthalmischen Linsen bzw. Linsenträger auf der dreispurigen Fördereinrichtung. Insbesondere können die geförderten ophthalmischen Linsen bzw. Linsenträger wiederholt den Bearbeitungseinrichtungen zu- bzw. von diesen weggefördert werden.

Gemäß einem besonders bevorzugten Aspekt der vorschlagsgemäßen Ausführungsform kann mittels der vorzugsweise zwischen den Bearbeitungseinrichtungen angeordneten Schiebeeinrichtungen nach jeder Bearbeitungseinrichtung eine Rückförderung insbesondere über die dritte Transportspur eingeleitet werden und nicht erst am Ende der Fördereinrichtung. Dies ermöglicht eine Vermeidung von Anstauungen an Linsenträgern sowie insbesondere einen höheren Durchsatz, da die Linsenträger über kürzere Strecken zirkuliert werden können und nicht über die gesamte Strecke der dritten Transportspur zurückgefördert werden müssen, bevor sie über eine Schiebeeinrichtung erneut auf die erste den Bearbeitungsmaschinen benachbarte Transportspur geschoben werden.

Gemäß einem besonders bevorzugten Aspekt einer derartigen vorschlagsgemäßen Anlage kann die dreispurige Fördereinrichtung mit mindestens einer weiteren, vorzugsweise gegenüberliegenden Fördereinrichtung verbunden werden. Die Verbindung kann bspw. über die oben genannten Verbindungselemente erfolgen. Denkbar sind hierbei Verbindungen auf beiden Seiten der Fördereinrichtungen zu einem Ring oder auch U-förmige Anordnungen, bei der eine Seite der Förderbänder durch das Weglassen der Verbindungselemente offen und somit der Zwischenraum zwischen den beiden vorzugsweise parallel verlaufenden Fördereinrichtungen für eine Bedienperson zugänglich bleibt.

Die beiden Fördereinrichtungen bzw. Reihen an Bearbeitungseinrichtungen in diesem Anlagensystem sind vorzugsweise derart beabstandet, dass der Zwischenraum eine Zugangsmöglichkeit für eine Bedienperson bildet. Dieser ist bei einer U-förmigen Anordnung besonders gut für eine Bedienperson zu erreichen. Im Falle einer ringartigen Anordnung sind die Verbindungselemente derart ausgebildet, dass diese bedarfsweise für die Zugänglichkeit des Zwischenraumes gelöst bzw. geöffnet oder weggeklappt werden können. Alternativ oder zusätzlich können diese auch höher- oder tiefergelegt und/oder bspw. über Vertikalförderer oder Gefällestrecken angeschlossen sein, sodass ein vorzugsweise freier Zugang zu dem Zwischenraum gewährleistet ist.

Der Zwischenraum kann alternativ oder zusätzlich in an sich bekannter Weise für Betriebsmittelbehälter der Bearbeitungseinrichtungen, wie z.B. Behälter für Späne, Poliermittel oder Kühlmittel, genutzt werden. Die Behälter können jedoch auch unterhalb der Förderbänder angeordnet sein. Dadurch kann der Zwischenraum bedarfsweise anderweitig genutzt oder verkleinert und somit das gesamte Anlagensystem schmaler gehalten werden, um Platz zu sparen.

In einer weiteren Ausführungsform der vorschlagsgemäßen Anlage sind die Bearbeitungseinrichtungen nicht außerhalb des ringartigen bzw. U-förmigen Anlagensystems, sondern in dem Zwischenraum zwischen den beiden Fördereinrichtungen und vorzugsweise derart zueinander angeordnet, dass der Zwischenraum möglichst schmal gehalten werden, eine Bedienperson jedoch noch auf einfache und zügige Weise jede Bearbeitungseinrichtung erreichen kann. Neben einer erheblichen Platzersparnis durch das Wegfallen der nach außen ragenden Bearbeitungseinrichtungen besteht ein weiterer Vorteil dieser alternativen Ausführungsform darin, dass die Bedienperson einen kürzeren Weg von einer Bearbeitungseinrichtung zu anderen hat.

Besonders bevorzugt wird die dreispurige Fördereinrichtung mit einer zweispurigen Fördereinrichtung mit zwei in die gleiche Richtung laufenden Transportspuren, insbesondere einer ersten und einer zweiten Transportspur, kombiniert. In dieser Ausgestaltung sind jeweils mehrere Bearbeitungseinrichtungen entlang der Fördereinrichtungen, insbesondere entlang der ersten Transportspuren, vorzugsweise in einer Reihe angeordnet. Die dreispurige Fördereinrichtung mit der rückfördernden dritten Transportspur dient dabei bevorzugt als Expresslinie mit der Aufgabe, einen hohen Durchsatz zu gewährleisten.

Gemäß einem weiteren Aspekt der vorschlagsgemäßen Anlage können die dritte Transportspur und die oben genannten Verbindungselemente bedarfsweise auch kombiniert werden. Denkbar ist bspw. eine Ausgestaltung, in der die zweite Transportspur mit der dritten parallel und bzgl. der zweiten Transportspur in entgegengesetzte Richtung verlaufenden Transportspur um die Kurve bzw. Ecke herum durch an sich bekannte Verbindungselemente miteinander verbunden ist.

Bei der aus der WO 2013/131656 A1 bekannten Anlage werden die der ersten Transportspur zugehörigen den Bearbeitungseinrichtungen zugeordneten Förderbänder jeweils separat durch die Maschinensteuerung gesteuert und bilden keinen Teil der Transfersteuerung, d.h. die Förderanlage wird nicht zentral durch eine Steuerung, sondern durch mehrere Steuerungen, nämlich eine zentrale und eine Maschinensteuerung, gesteuert.

Bei der vorschlagsgemäßen Anlage bzw. dem vorschlagsgemäßen Verfahren ist hingegen eine, insbesondere zentrale, Steuerung vorgesehen, welche das gesamte Fördersystem, d.h. die Fördereinrichtung samt Förderbändern bzw. Transportspuren, Schiebeeinrichtungen sowie Stoppeinrichtungen, im Haltebereich vor den jeweiligen Bearbeitungseinrichtungen, steuert. Die Bearbeitungseinrichtungen werden, um weiterhin eine unabhängige Bearbeitung zu erlauben, losgelöst bzw. unabhängig von der zentralen Steuerung, d.h. durch eine eigene Maschinensteuerung gesteuert. Es ist alternativ auch möglich, dass die Stoppeinrichtungen ebenso von der Maschinensteuerung gesteuert werden.

Diese Verschiebung der Automation auf eine zentrale Steuerung ermöglicht wesentlich vereinfachte Montage-, Umbau- und Wartungsarbeiten der vorschlagsgemäßen Anlage, insbesondere da die Bearbeitungseinrichtungen mit ihren eigenen Maschinensteuerungen nur noch an die zentral gesteuerte Fördereinrichtung und an keine zusätzlichen den Bearbeitungseinrichtungen zugeordneten separaten Förderbänder angeschlossen werden müssen. Dadurch ist eine Erweiterung der vorschlagsgemäßen Anlage um weitere Bearbeitungseinrichtungen bzw. zu einem Anlagensystem wesentlich erleichtert.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung bevorzugter Ausführungsformen bzw. Ausführungsbeispiele anhand der Figuren. Es zeigen in schematischer, nicht maßstabsgetreuer Darstellung:
- Fig. 1: einen schematischen Ausschnitt einer vorschlagsgemäßen Anlage mit einer Fördereinrichtung, zwei Bearbeitungseinrichtungen sowie einer dazwischen angeordneten Schiebeeinrichtung in einer Draufsicht;
- Fig. 2: eine schematische Teildarstellung der Fördereinrichtung der vorschlagsgemäßen Anlage gemäß Fig. 1;
- Fig. 3: eine perspektivische Ansicht eines ersten Ausführungsbeispiels der Schiebeeinrichtung der vorschlagsgemäßen Anlage gemäß Fig. 1;
- Fig. 4: eine Seitenansicht der Schiebeeinrichtung gemäß Fig. 3;
- Fig. 5: eine perspektivische Ansicht eines zweiten Ausführungsbeispiels der Schiebeeinrichtung;
- Fig. 6: die Schiebeeinrichtung gemäß Fig. 5 in einer anderen Perspektive;
- Fig. 7: eine schematische Darstellung eines Linsenträgers in einer Draufsicht; und
- Fig. 8: einen schematischen Ausschnitt einer weiteren Ausführungsform der vorschlagsgemäßen Anlage in einer Draufsicht.

In den Figuren werden für gleiche Komponenten und Bauteile die gleichen Bezugszeichen verwendet, wobei sich entsprechende Eigenschaften und Vorteile ergeben, auch wenn eine wiederholte Beschreibung weggelassen ist.

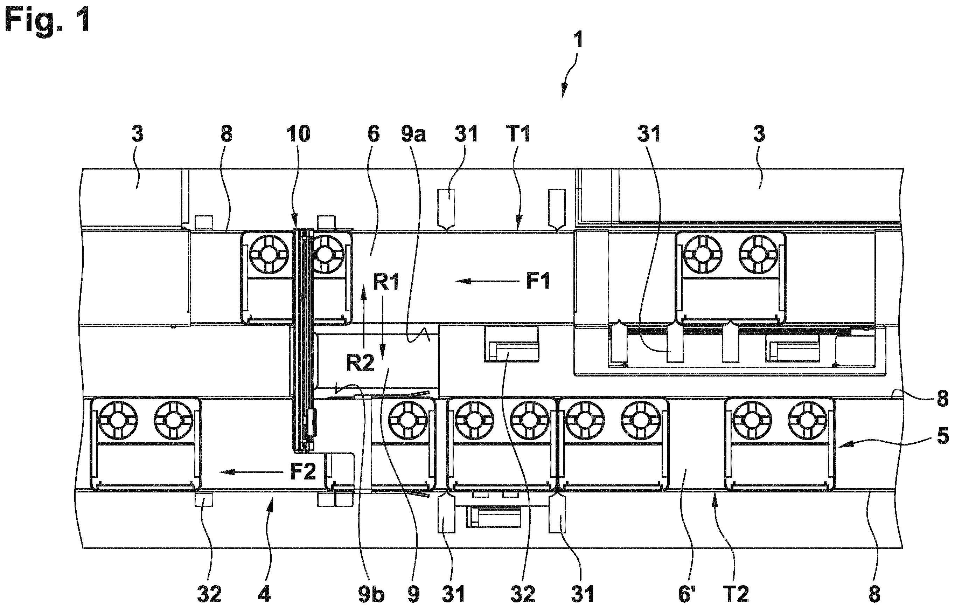

Fig. 1 zeigt einen schematischen Ausschnitt eines bevorzugten Ausführungsbeispiels einer vorschlagsgemäßen Anlage 1 zum Bearbeiten, insbesondere ophthalmischer, Linsen 2.

Bei der ophthalmischen Linse 2 handelt es sich vorzugsweise um ein Brillenglas, also eine Linse für eine Brille.

Die ophthalmische Linse 2 besteht vorzugsweise aus Kunststoff, kann jedoch gegebenenfalls auch aus Glas oder einem anderen Material bestehen.

Die vorschlagsgemäße Anlage 1 weist vorzugsweise mehrere, separate, Bearbeitungseinrichtungen 3 zur insbesondere unabhängigen Bearbeitung der ophthalmischen Linsen 2 auf.

Die Anlage 1 weist vorzugsweise unterschiedliche Bearbeitungseinrichtungen 3, z.B. zum Blocken, zur formgebenden, insbesondere spanenden Bearbeitung, zum Polieren, zum Prüfen bzw. Messen, zum Markieren, zum Reinigen und/oder zum Beschichten, von ophthalmischen Linsen 2 auf.

Weiter können dabei nicht nur verschiedenartige, sondern auch mehrere gleichartige Bearbeitungseinrichtungen 3 für die gleiche Bearbeitung in die Anlage 1 integriert werden.

Wie Fig. 1 zu entnehmen, weist die vorschlagsgemäße Anlage 1 eine Fördereinrichtung 4 zum Transport der ophthalmischen Linsen 2 bzw. von Linsenträgern 5 insbesondere von einer Bearbeitungseinrichtung 3 zur anderen auf. Der Fördereinrichtung 4 kommt die Aufgabe zu, die ophthalmischen Linsen 2 bzw. Linsenträger 5 der jeweiligen Bearbeitungseinrichtung 3 zuzuführen, nach erfolgter Bearbeitung von einer Bearbeitungseinrichtung 3 zu einer anderen Bearbeitungseinrichtung 3 zu fördern und/oder von einer Bearbeitungseinrichtung 3 wegzuführen.

Die Förderung ophthalmischer Linsen 2 bzw. Linsenträger 5 auf die Fördereinrichtung 4 bspw. durch eine Aufnahmestation (nicht dargestellt) erfolgen. Ein Abtransport der Linsen 2 bzw. Linsenträger 5 von der Fördereinrichtung 4 kann mittels einer Abgabestation (nicht dargestellt) erfolgen.

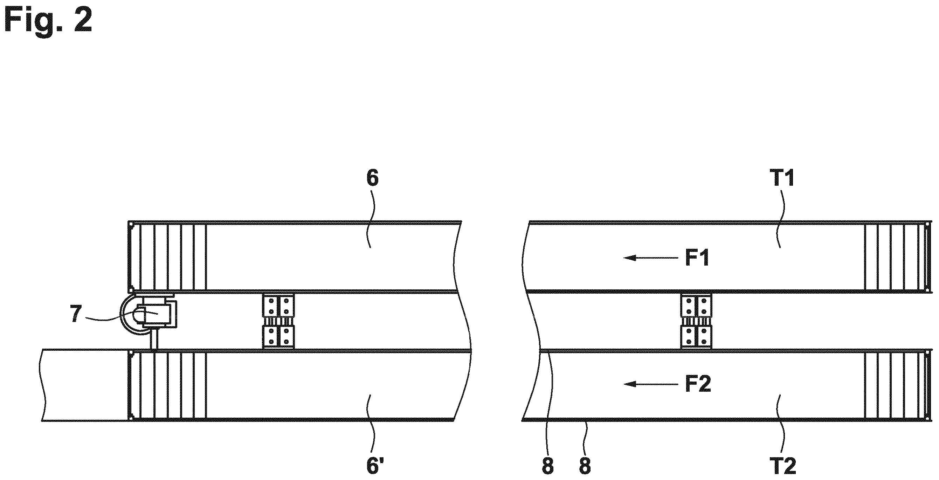

Die Fördereinrichtung 4 weist vorzugsweise mindestens ein insbesondere durchgehendes Förderband 6, vorzugsweise zwei durchgehende Förderbänder 6, 6' auf, wie in Fig. 1 und 2 angedeutet.

Weiter weist die Fördereinrichtung 4 vorzugsweise zwei Transportspuren T1, T2 auf, insbesondere wobei die Förderbänder 6, 6' jeweils durch mindestens eine Transportspur T1, T2 gebildet werden.

Im Darstellungsbeispiel entsprechen die Förderbänder 6, 6' der jeweiligen Transportspur T1, T2 (Fig. 1 und 2). Insbesondere bilden die Förderbänder 6, 6' die jeweilige Transportspur T1 und T2.

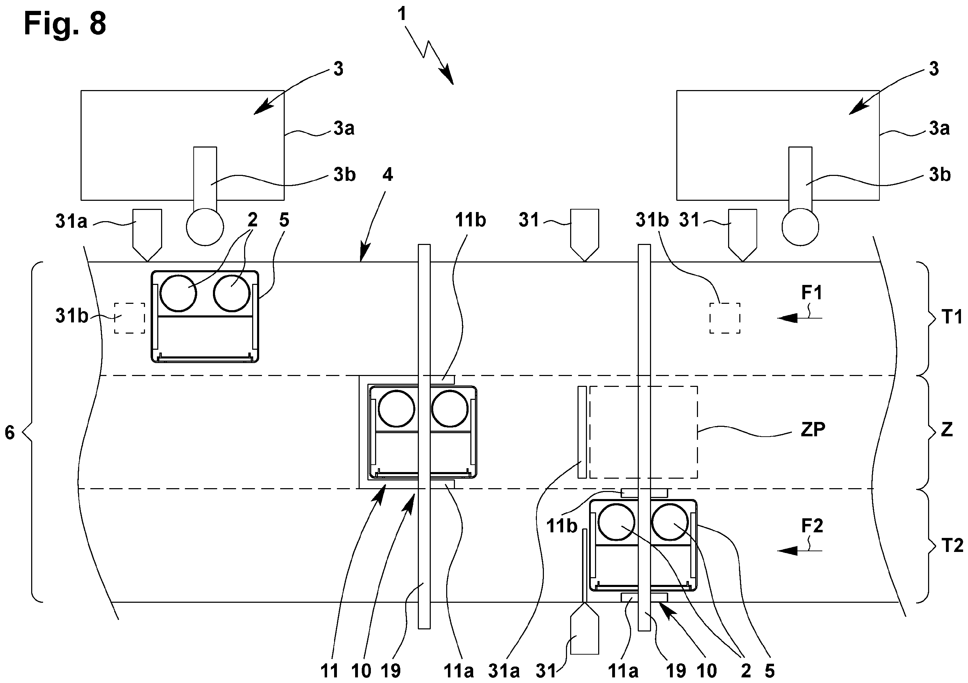

In einer alternativen Ausgestaltung bzw. weiteren Ausführungsform, die in Fig. 8 dargestellt ist, weist mindestens das Förderband 6 mehrere, insbesondere zwei Transportspuren T1, T2 auf bzw. bildet diese.

Vorzugsweise weisen mehrere oder alle Bearbeitungseinrichtungen 3 der Anlage 1 ein eigenes Gehäuse 3a und/oder eine eigene Manipulationseinrichtung 3b auf, wie schematisch in Fig. 8 angedeutet.

Die Manipulationseinrichtung 3b dient insbesondere der Aufnahme einer zu bearbeitenden Linse 2, insbesondere aus dem jeweiligen Linsenträger 5, und Übergabe an die zugeordnete Bearbeitungseinrichtung 3 und/oder hält die Linse 2 während der Bearbeitung. Alternativ oder zusätzlich dient die Manipulationseinrichtung 3b vorzugsweise der Abgabe einer bearbeiteten Linse 2, insbesondere an einen entsprechenden bzw. denselben Linsenträger 5.

Die Förderrichtung der Förderbänder 6, 6' ist in Fig. 1 und 2 jeweils durch einen Pfeil F1 bzw. F2 angedeutet. Die Förderrichtung F1, F2 der Transportspuren T1, T2 richtet sich demnach vorzugsweise nach der Förderrichtung der Förderbänder 6, 6'.

Vorzugsweise fördert das zweite Förderband 6' beim ersten dargestellten Ausführungsbeispiel der vorschlagsgemäßen Anlage 1 und damit die Transportspur T2 in die gleiche Richtung wie das erste Förderband 6 bzw. die erste Transportspur T1. Hier sind jedoch auch andere konstruktive Lösungen möglich.

Die erste Transportspur T1 ist den Bearbeitungseinrichtungen 3 vorzugsweise unmittelbar benachbart. Insbesondere dient die erste Transportspur T1 zur Förderung der Linsen 2 bzw. Linsenträger 5 von einer Bearbeitungseinrichtung 3 zur nächsten bzw. verbindet die Bearbeitungseinrichtungen 3 miteinander.

Gemäß der vorhergehenden Definition des Ausdrucks "unmittelbar benachbart" grenzen die Bearbeitungseinrichtungen 3 und die Transportspur T1 bzw. die Fördereinrichtung 4 vorzugsweise direkt aneinander, insbesondere zumindest im Wesentlichen abstands- bzw. lückenlos.

Die Bearbeitungseinrichtungen 3 können demnach insbesondere direkt an der Fördereinrichtung 4 bzw. an der Transportspur T1 positioniert werden.

Daher besteht ein besonderer Vorteil der vorschlagsgemäßen Anlage 1 darin, dass je nach Bedarf Erweiterungen der Anlage 1 um zusätzliche Bearbeitungseinrichtungen 3 sehr einfach durchführbar sind, da diese nur noch an die Fördereinrichtung 4 bzw. die erste Transportspur T1 herangeschoben werden müssen.

Die zweite, zumindest im Wesentlichen parallele, Transportspur T2 dient zur insbesondere parallelen Förderung bzw. zum Weitertransport der jeweiligen ophthalmischen Linsen 2 bzw. Linsenträger 5. Insbesondere dient die zweite Transportspur T2 als Überholspur, auf der die ophthalmischen Linsen 2 bzw. Linsenträger 5, welcher einer Bearbeitungseinrichtung 3 nicht zugeführt werden sollen, weitertransportiert werden.

Vorzugsweise ist zwischen den, insbesondere separaten, Förderbändern 6, 6' ein Abstand vorgesehen, derart, dass ein Zwischenraum zwischen den Förderbändern 6, 6' entsteht. Dies hat den Vorteil, dass verschiedene Komponenten, insbesondere Stoppeinrichtungen 31 und/oder Messeinrichtungen, wie Sensoren 32, untergebracht werden können.

Fig. 1 zeigt mehrere Stoppeinrichtungen 31 in Form von Vereinzelungen. Diese dienen insbesondere zum bedarfsweisen Anhalten eines Linsenträgers 5 bei laufenden Förderbändern 6, 6'. Ein Anhalten der Linsenträger 5 erfolgt insbesondere, um die Linsenträger 5 individuell an den entsprechenden Stellen auf der Fördereinrichtung 4 zu positionieren - bspw. auf der ersten Transportspur T1 im Bereich der Bearbeitungseinrichtungen 3 oder vor diesen, insbesondere zum Be- und Entladen der Bearbeitungseinrichtungen 3 mit ophthalmischen Linsen 2, und/oder auf beiden Transportspuren T1 und T2 insbesondere vor oder bei einer Schiebeeinrichtung 10.

Vorzugsweise befinden sich die Stoppeinrichtungen 31 in Bezug auf die Förderrichtung F1, F2 vor den jeweiligen Schiebeeinrichtungen 10, vorzugsweise mit einem Abstand zur Schiebeeinrichtung 10 bzw. zueinander, insbesondere von mindestens einer Länge des Linsenträgers 5.

Weiter sind Stoppeinrichtungen 31 im Haltebereich der Bearbeitungseinrichtungen 3 vorgesehen, die insbesondere derart zueinander beabstandet sind, dass das Be- und Entladen der Linsenträger 5, insbesondere mit ophthalmischen Linsen 2, besonders zuverlässig erfolgen kann.

Die vorschlagsgemäße Anlage 1 weist vorzugsweise Sensoren 32, bspw. Lichttaster, insbesondere zum Erfassen des Vorhandenseins und/oder der Position von Linsen 2 bzw. Linsenträgern 5, und/oder Barcode-Leser, insbesondere zur Identifizierung von ophthalmischen Linsen 2 bzw. Linsenträgern 5, auf.

Beim Darstellungsbeispiel werden die Förderbänder 6, 6', die insbesondere jeweils eine Transportspur T1, T2 bilden, insbesondere durch ein gemeinsames Antriebssystem 7 angetrieben (Fig. 2), vorzugsweise derart, dass die beiden Förderbänder 6, 6' bzw. die Transportspuren T1, T2, insbesondere mit gleicher Geschwindigkeit, in derselben Richtung F1, F2 fördern bzw. umlaufen. Dies wird in einer besonders bevorzugten Ausführungsform durch eine die beiden Förderbänder 6, 6'miteinander verbindende Antriebswelle erreicht.

Eine weitere Variante der Fördereinrichtung 4 der vorschlagsgemäßen Anlage 1 sieht vor, dass die zwei Förderbänder 6, 6' der Fördereinrichtung 4 durch zwei separate Antriebssysteme 7 oder vorzugsweise durch ein gemeinsames Antriebssystem 7 mit Umlaufgetriebe angetrieben werden. Dies ermöglicht insbesondere Variationen in der Förder- bzw. Umlaufgeschwindigkeit der Förderbänder 6, 6' bzw. der Transportspuren T1, T2.

Beispielsweise ist es denkbar, die Geschwindigkeit des Förderbandes 6' und damit der Transportspur T2 höher zu wählen als die des Förderbandes 6 bzw. der Transportspur T1, um bei einem hohen Aufkommen an Linsenträgern 5 eine Anstauung von Linsenträgern 5 zu vermeiden bzw. einen höheren Durchsatz zu ermöglichen.

Denkbar sind bei einer solchen Ausführungsform mit getrennten Antrieben 7 oder einer entsprechenden getrieblichen Kopplung ebenso entgegengesetzte Förderrichtungen F1 und F2.

Gemäß einer weiteren Ausführungsform, wie in Fig. 8 dargestellt, kann die Fördereinrichtung 4 der vorschlagsgemäßen Anlage 1 auch (nur) ein Förderband 6, welches in zwei getrennte Bereiche, d.h. zwei Transportspuren T1 und T2 aufgeteilt ist, sowie ein Antriebssystem 7 aufweisen.

Vorzugsweise weist die Fördereinrichtung 4 der vorschlagsgemäße Anlage 1, insbesondere randseitig der Förderbänder 6, 6' angeordnete, Leitstege 8 auf, wie in Fig. 1 angedeutet. Besonders bevorzugt ist jedes Förderband 6, 6' durch jeweils zwei Leitstege 8 begrenzt.

Die Leitstege 8 ermöglichen eine, insbesondere zumindest im Wesentlichen geradlinige, Führung der Linsen 2 bzw. Linsenträger 5 entlang der Transportspuren T1, T2, insbesondere parallel zu den Förderrichtungen F1 und F2.

Wie ferner aus Fig. 1 ersichtlich, weist die vorschlagsgemäße Anlage 1 insbesondere ein oder mehrere Schiebeeinrichtungen 10 als Transfereinrichtungen zum Wechsel der Transportspuren T1, T2 auf.

Die Schiebeeinrichtungen 10 sind vorzugsweise zwischen den Bearbeitungseinrichtungen 3 angeordnet sind. Besonders bevorzugt sind Schiebeeinrichtungen 10 zwischen allen jeweils benachbarten Bearbeitungseinrichtungen 3 angeordnet. Möglich sind aber auch Ausführungsformen, in denen nicht zwischen allen, sondern nur vor oder nach einigen Bearbeitungseinrichtungen 3 Schiebeeinrichtungen 10 angeordnet sind. Optional können die Schiebeeinrichtungen 10 auch einer Bearbeitungseinrichtung 3 zugordnet sein, insbesondere an eine Bearbeitungseinrichtung 3, unmittelbar oder mittelbar, angrenzen.

Beim Darstellungsbeispiel sind die Bearbeitungseinrichtungen 3, in Bezug auf die Förderrichtung F1, F2, vorzugsweise hintereinander, insbesondere in einer Reihe, besonders bevorzugt auf einer gemeinsamen Seite der Fördereinrichtung 4 bzw. eines Förderbandes 6, 6' angeordnet.

Die Schiebeeinrichtungen 10 dienen vorzugsweise dem, insbesondere bedarfsweisen, Transport bzw. Wechsel der Linsen 2 bzw. Linsenträger 5 von einer Transportspur T1, T2 zur anderen und/oder von einem Förderband 6, 6' zum anderen, insbesondere quer zur Förderrichtung F1, F2.

Die Querförderung kann in beiden Richtungen R1, R2 quer zur Förderrichtung F1, F2 erfolgen. Im Darstellungsbeispiel kann die Querförderung in Richtung R1 von der ersten Transportspur T1 bzw. dem ersten Förderband 6 auf die zweite Transportspur T2 bzw. das zweite Förderband 6' und umgekehrt in Richtung R2 von der zweiten Transportspur T2 bzw. dem zweiten Förderband 6' auf die erste Transportspur T1 bzw. das erste Förderband 6 erfolgen.

Der Einfachheit halber sind die Richtungen R1, R2 in Fig. 1 senkrecht bzw. in einem rechten Winkel relativ zur Förderrichtung F1, F2 dargestellt. Allerdings kann die Querförderung auch, wie bereits oben erwähnt, in beliebigen anderen Winkeln, insbesondere diagonal, in Bezug auf die Förderrichtung F1, F2 erfolgen.

Weiter sind die Schiebeeinrichtungen 10 vorzugsweise zur bedarfsweisen Aufnahme und temporären Zwischenspeicherung der ophthalmischen Linsen 2 bzw. Linsenträger 5 ausgebildet.

Vorzugsweise weist die vorschlagsgemäße Anlage 1 bzw. Schiebeeinrichtung 10 eine Zwischenposition ZP (Fig. 8) bzw. Zwischenplatte 9 (Fig. 1), insbesondere im Bereich der Schiebeeinrichtungen 10 zwischen den Transportspuren T1, T2 und/oder Förderbändern 6, 6', auf. Die Zwischenposition ZP stellt insbesondere einen Park- oder Wartebereich für einen Linsenträger 5 dar und kann optional durch die Zwischenplatte 9 gebildet werden. Die Zwischenplatte 9 dient insbesondere zur Überbrückung des Abstandes zwischen den Förderbändern 6, 6', insbesondere bei Querförderung der ophthalmischen Linsen 2 bzw. Linsenträger 5 mittels der Schiebeeinrichtung 10 von einem Förderband 6, 6' zum anderen.

Weiter sind im Bereich der Schiebeeinrichtungen 10, insbesondere im Bereich der Zwischenplatte 9, vorzugsweise Aussparungen bzw. Durchbrüche der Leitstege 8 vorgesehen, (siehe Fig. 1, 3, 5 und 6), um insbesondere eine Querförderung der Linsen 2 bzw. Linsenträger 5 ohne Hub zu ermöglichen.

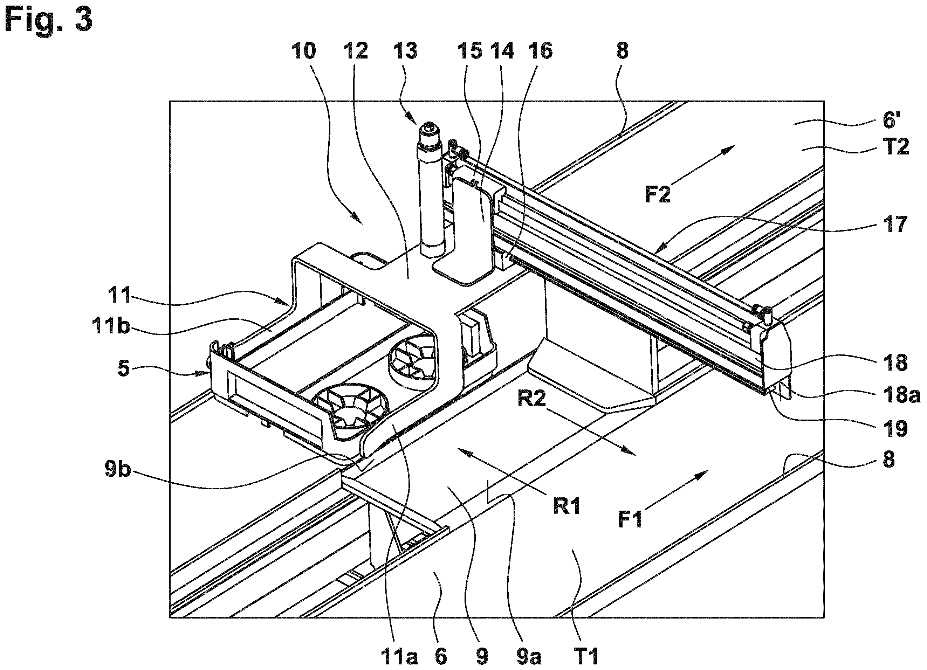

Besonders bevorzugt liegt die Zwischenplatte 9, wie in perspektivischer Darstellung gemäß Fig. 3 zu erkennen, (etwas) höher als die Förderbänder 6, 6'und/oder weist an den den Förderbändern 6, 6' zugewandten Rändern insbesondere Anschrägungen 9a, 9b auf. Diese dienen insbesondere einem Heraufbefördern des Linsenträgers 5 auf die Zwischenplatte 9, vorzugsweise ohne dass der Linsenträger 5 angehoben werden muss. Das höhere Niveau der Zwischenplatte 9 in Bezug auf die Förderbänder 6, 6' dient insbesondere dem Zweck, dass der Linsenträger 5 beim Befördern von der Zwischenplatte 9 auf ein Förderband 6, 6' bzw. eine Transportspur T1, T2 nicht an der Kante des jeweiligen Förderbandes 6, 6' hängenbleibt.

Der Transport/Wechsel bzw. die Querförderung der ophthalmischen Linsen 2 bzw. Linsenträger 5 durch die Schiebeeinrichtungen 10 kann einerseits von einem Förderband 6, 6' zum anderen, insbesondere unabhängig von der Anzahl der Transportspuren auf einem Förderband, erfolgen. Die Querverschiebung kann hierbei sowohl zwischen zwei beabstandeten Förderbändern 6, 6', die insbesondere durch eine Zwischenplatte 9 miteinander verbunden sind, als auch zwischen zwei Förderbändern 6, 6', welche direkt aneinandergrenzen bzw. nicht zueinander beabstandet sind, erfolgen.

Alternativ kann eine Querförderung der ophthalmischen Linsen 2 bzw. Linsenträger 5 durch die Schiebeeinrichtungen 10 auch zwischen mehreren Transportspuren T1, T2 auf einem gemeinsamen Förderband 6, 6' erfolgen.

Wie in Fig. 3 zu sehen, weist die Schiebeeinrichtung 10 vorzugsweise eine Führungseinrichtung, insbesondere in Form einer Gabel 11 und/oder mit zwei Seitenelementen 11a, 11b, auf. Im Darstellungsbeispiel sind die Seitenelemente 11a, 11b, vorzugsweise einstückig, mit einer Halterung bzw. Haltefläche 12 verbunden.

Die Seitenelemente 11a und 11b weisen an ihren freien Enden vorzugsweise Einlaufschrägen auf, so dass ein Linsenträger 5 sicher zwischen den Seitenelementen 11a, 11b aufgenommen wird.

Beim Darstellungsbeispiel weist die Schiebeeinrichtung 10 vorzugsweise einen, insbesondere in die Halterung bzw. Haltefläche 12 eingelassenen bzw. integrierten oder daran befestigten, insbesondere vertikalen Stopper 13 auf. Besonders bevorzugt ist der Stopper 13 als Pneumatikzylinder ausgeführt.

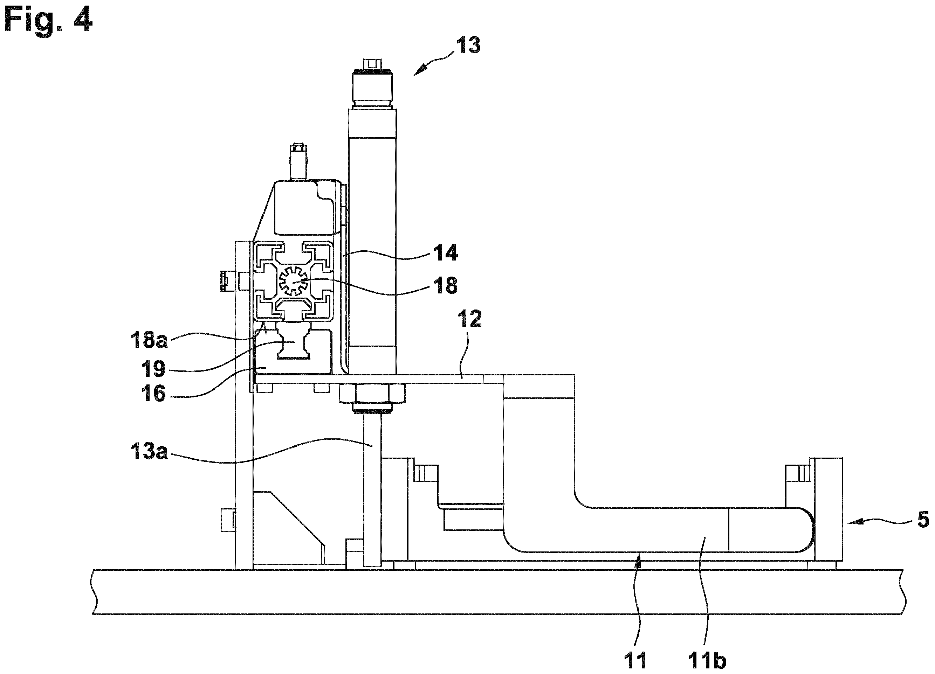

Der Stopper 13 ist vorzugsweise zum Stoppen bzw. Anhalten des Linsenträgers 5 vorgesehen, insbesondere bei laufendem Förderband 6, 6'. Wie insbesondere der Seitenansicht gemäß Fig. 4 zu entnehmen ist, weist der Stopper 13 im Darstellungsbeispiel einen ausfahrbaren Kolben 13a auf. Ist der Kolben 13a nach unten zu den Förderbändern 6, 6' hin ausgefahren, wird der Linsenträger 5 bei laufenden Förderbändern 6, 6' durch den Kolben 13a angehalten bzw. kommt an diesem zur Anlage.

Wenn sich der Kolben 13a im eingefahrenen Zustand befindet, kann der Linsenträger 5 auf der Fördereinrichtung 4 bzw. den Förderbändern 6, 6' weiterlaufen.

Die Führungseinrichtung bzw. Gabel 11 ist vorzugsweise über eine Linsenführung bzw. eine Schiene 19 und einen Schlitten quer bewegbar oder verschiebbar, hier horizontal in Richtung R1, R2.

Weiter ist Fig. 3 zu entnehmen, dass die Halterung bzw. Haltefläche 12 bzw. die Gabel 11, insbesondere über einen Befestigungswinkel 14, mit einem Linearantrieb, bspw. über einen Mitnehmer 15, vorzugsweise in Form eines Schlittens, verbunden ist.

Der Mitnehmer 15 bzw. Schlitten bzw. Linearbetrieb dient insbesondere einer Mitnahme bzw. Linearbewegung der Führungseinrichtung bzw. Gabel 11 und damit der Querförderung des Linsenträgers 5 von einer Transportspur T1, T2 zur anderen.

Vorzugsweise ist der Mitnehmer 15 linear bewegbar angeordnet, insbesondere auf einem Transferzylinder 17.

Der Transferzylinder 17 ist vorzugsweise als Linearantrieb, insbesondere als Pneumatikzylinder, ausgeführt.

Der Transferzylinder 17 ist beim Darstellungsbeispiel auf einem Träger 18 aufgebracht. Vorzugsweise ist auf einer Längsseite, insbesondere auf der Unterseite 18a, des Trägers 18 eine Führung oder Schiene 19 befestigt bzw. angebracht, die vorzugsweise als Linearführung ausgeführt ist.

Die Führungseinrichtung bzw. Gabel 11 ist vorzugsweise entlang der Führung bzw. Schiene 19, insbesondere linear, bewegbar bzw. positionierbar, insbesondere über einen daran verschiebbar geführten Schlitten 16.

Die Querbewegung der Führungseinrichtung bzw. Gabel 11 erfolgt im Darstellungsbeispiel insbesondere über den Linearantrieb des Transferzylinders 17.

Die, insbesondere lineare, Verschiebung bzw. Bewegung der Führungseinrichtung bzw. des Schlittens 16 entlang der Führung bzw. Schiene 19 ermöglicht eine besonders zuverlässige bzw. zielgerichtete Querförderung des Linsenträgers 5. Durch die beiden Linearführungskomponenten, d.h. den Transferzylinder 17 einerseits und die Führung bzw. Schiene 19 andererseits, erfolgt die Querförderung besonders stabil.

Gemäß einem weiteren, auch unabhängig realisierbaren Aspekt der vorliegenden Erfindung ist mit der Schiebeeinrichtung 10 in Kombination mit der Fördereinrichtung 4 der vorschlagsgemäßen Anlage 1 das folgende Verfahren durchführbar:
Sobald ein Linsenträger 5 in die Führungseinrichtung fährt, wird der Linsenträger 5 durch den Stopper 13 bzw. heruntergefahrenen Kolben 13a angehalten. Zur Querförderung des Linsenträgers 5 von einer Transportspur T1, T2 zur anderen bzw. von einem Förderband 6, 6' zum anderen wird die Führungseinrichtung bzw. Gabel 11 mittels des Transferzylinders 17 und insbesondere der unterstützenden Linearführung entlang der Führung bzw. Schiene 19 über die Zwischenplatte 9 von einer Transportspur T1, T2 zur anderen bzw. von einem Förderband 6, 6' zum anderen transportiert, wobei der Linsenträger 5 zwischen den Seitenelementen 11a, 11b der Führungseinrichtung bzw. Gabel 11 mitgeführt wird. Wenn der Linsenträger 5 auf einer Transportspur T1, T2 in die Förderrichtung F1, F2 weiterbefördert werden soll, fährt der Stopper 13 bzw. Kolben 13a hoch, derart, dass der Linsenträger 5 durch die Führungseinrichtung bzw. Gabel 11 auf dem laufenden Förderband 6, 6' hindurchfahren kann. Dies wird insbesondere dadurch ermöglicht, dass keine seitlichen Spannkräfte von den Seitenelementen 11a, 11b auf den Linsenträger 5 einwirken.

Optional ist ein direktes Passieren der Führungseinrichtung bzw. Gabel 11 durch den Linsenträger 5 bei laufendem Förderband 6, 6', d.h. ohne erfolgende Querförderung des Linsenträgers 5 von einer Transportspur T1, T2 zur anderen, ebenfalls möglich. Dies ist bspw. vorgesehen, wenn ein auf der zweiten Transportspur T2 geförderter Linsenträger 5 nicht an der in Bezug auf die Förderrichtung F1, F2 nächstliegenden Bearbeitungseinrichtung 3, sondern erst an einer nachfolgenden Bearbeitungseinrichtung 3 bearbeitet werden soll.

Die Schiebeeinrichtung 10 bzw. deren Führungseinrichtung oder Gabel 11 ist besonders bevorzugt derart ausgebildet, dass der Linsenträger 5 zum Wechsel der Transportspur T1, T2 und/oder zum Bewegen in eine Zwischenposition ZP bzw. einen Zwischenbereich Z zwischen den Transportspuren T1, T2 und/oder aus der Zwischenposition ZP bzw. dem Zwischenbereich Z in eine Transportspur T1 bzw. T2 geschoben oder gezogen wird.

Das Bewegen erfolgt also vorzugsweise ausschließlich durch primär seitliche Krafteinwirkung, insbesondere ohne aktives Anheben des Linsenträgers 5 durch die Schiebeeinrichtung 10 bzw. deren Führungseinrichtung oder Gabel 11.

Besonders bevorzugt ist die Schiebeeinrichtung 10 bzw. deren Führungseinrichtung oder Gabel 11 derart ausgebildet, dass der Linsenträger 5 sowohl in Förderrichtung F1, F2 als auch quer dazu - also insbesondere seitlich - geführt oder in seiner Bewegung begrenzt wird, um den Linsenträger 5 sicher und schnell bzw. in definierter Weise in Querrichtung bewegen bzw. verschieben zu können, insbesondere ohne dass sich der Linsenträger 5 verdrehen oder verkanten oder gar in der Horizontalebene verdrehen kann. In diesem Zusammenhang ist anzumerken, dass die Schiebeeinrichtung 10 bzw. deren Führungseinrichtung oder Gabel 11 ein gewisses, vorzugsweise geringes seitliches Spiel - hier besonders bevorzugt zwischen den Seitenelementen 11a und 11b - zum Linsenträger 5 vorsieht.

Alternativ oder zusätzlich können die Seitenelemente 11a und 11b optional auch zueinander verstellbar sein, bspw. zur Anpassung an verschiedene Linsenträgerbreiten.

Alternativ oder zusätzlich kann die Führungseinrichtung oder Gabel 11 auch drehbar sein, insbesondere um eine vertikale Achse, bspw. um bedarfsweise den Linsenträger 5, bspw. um 90° oder 180° in der Horizontalebene für einen nachfolgend andere Förderrichtung drehen zu können.

Insbesondere kann die Schiebeeinrichtung 10 bzw. deren Führungseinrichtung oder Gabel 11 den Linsenträger 5 also an einer oder beiden Seiten (parallel zur Förderrichtung F1, F2 bzw. Transportspur T1, T2) als auch an einer in Förderrichtung F1 bzw. F2 vorlaufenden Seite führen bzw. in seiner Bewegung begrenzen, sodass insbesondere bei weiter in Förderrichtung F1 bzw. F2 laufendem Förderband 6 bzw. 6' bedarfsweise die gewünschte Querverschiebung des Linsenträgers 5 durch entsprechende Querbewegung der Schiebeeinrichtung 10 bzw. deren Führungseinrichtung oder Gabel 11 erfolgen kann.

Die bevorzugte zweiseitige oder dreiseitige Führung des Linsenträgers 5 (beim Darstellungsbeispiel an den Seiten durch die Seitenelemente 11a und 11b sowie an der vorlaufenden Seite durch den Stopper 13 durch die Schiebeeinrichtung 10 bzw. deren Führungseinrichtung oder Gabel 11) kann alternativ auch durch einen entsprechenden Eingriff oder Übergriff erreicht werden. Beispielsweise kann die Schiebeeinrichtung 10 bzw. deren Führungseinrichtung oder Gabel 11 nach einem Anhalten eines Linsenträgers 5 die vorlaufende Seitenwand übergreifen und dadurch den Linsenträger 5 insbesondere für die anschließende Querbewegung entsprechend führen bzw. sichern. Hier sind auch verschiedene andere konstruktive Lösungen möglich.

Weiter ist anzumerken, dass für das Bewegen des Linsenträgers 5 in eine Querrichtung R1 oder R2 eine zweiseitige Führung, nämlich an einer in Förderrichtung F1, F2 verlaufenden Seite und dazu quer bzw. senkrecht verlaufenden Seite, genügt und die Schiebeeinrichtung 10 bzw. deren Führungselement dementsprechend optional auch mit nur einem Seitenelement 11a oder 11b ausgebildet sein oder auf den Linsenträger 5 zur Querförderung in eine Richtung einwirken kann.

Bei der beschriebenen Ausführungsform ist die Führungseinrichtung bzw. Gabel 11 der Schiebeeinrichtung 10 vorzugsweise nur horizontal bzw. quer bewegbar und lediglich ein vertikal oder in sonstiger Weise (bspw. durch Schwenken) beweglicher Stopper 13 oder Kolben 13a vorgesehen. Jedoch sind auch andere konstruktive Lösungen möglich. Beispielsweise kann die Führungseinrichtung bzw. Gabel 11 optional auch insgesamt vertikal bewegbar bzw. anhebbar sein, wie nachfolgend anhand einer weiteren Ausführungsform erläutert. In diesem Fall kann die Bewegbarkeit des Stoppers 13 entfallen.

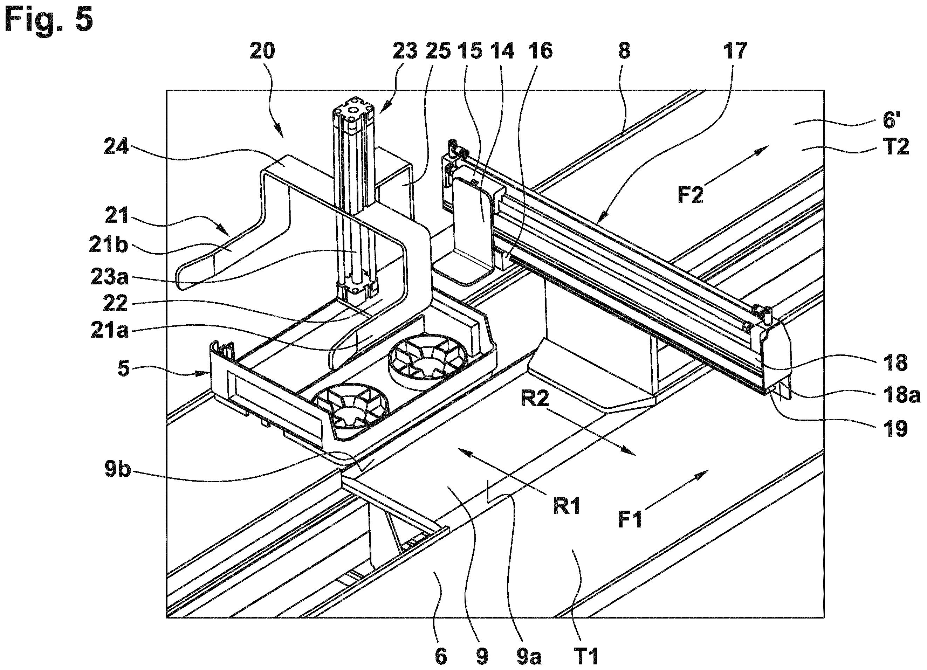

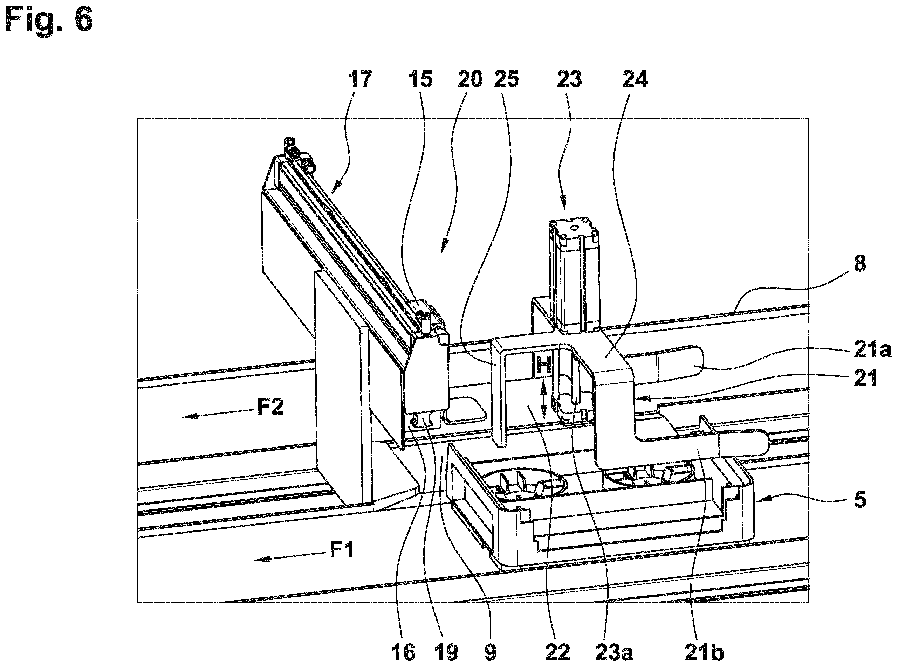

Anhand der Fig. 5 und 6 wird eine alternative Ausführungsform der Schiebeeinrichtung, nachfolgend als Schiebeeinrichtung 20 bezeichnet, näher erläutert.

Die Schiebeeinrichtung 20 weist vorzugsweise eine Führungseinrichtung bzw. Gabel 21, insbesondere mit zwei Seitenelementen 21a, 21b auf.

Gemäß einem besonders bevorzugten, auch unabhängig realisierbaren Aspekt der vorliegenden Erfindung ist die Führungseinrichtung bzw. Gabel 21 der Schiebeeinrichtung 20 in der Höhe bzw. vertikal verstellbar, insbesondere entlang des Pfeils H, besonders bevorzugt mittels eines Hubzylinders 23.

Beim Darstellungsbeispiel sind die Seitenelemente 21a, 21b, vorzugsweise einstückig, mit einer (oberen) Halterung bzw. Haltefläche 24 verbunden. Beim Darstellungsbeispiel weist die Schiebeeinrichtung 20 einen, insbesondere in die (obere) Halterung bzw. Haltefläche 24 eingelassenen bzw. damit gekoppelten, vertikalen Hubzylinder 23, vorzugsweise einen Pneumatikzylinder, auf, dessen unteres Ende vorzugsweise an der unteren Haltefläche 22 befestigt ist.

Vorzugsweise ist der Hubzylinder 23, insbesondere mittels eines Kolbens 23a, in der Höhe verstell- bzw. verschiebbar, insbesondere entlang des Pfeils H. Durch die vertikale Verschiebung des Hubzylinders 23 entlang des Pfeils H wird die Gabel 21, insbesondere über die obere Haltefläche 24, in der Höhe verschoben.

Im dargestellten Ausführungsbeispiel befindet sich die Gabel 21 in hochgefahrenem Zustand. In diesem Zustand kann der Linsenträger 5 bei laufendem Förderband 6, 6' unter der Gabel 21 hindurchfahren.

Wie Fig. 6 zu entnehmen, dient zum Anhalten der Linsenträger 5 auf den, insbesondere umlaufenden, Förderbändern 6, 6' vorzugsweise ein Stoppelement, insbesondere ein im Wesentlichen vertikaler Haltearm 25.

Befindet sich die Führungseinrichtung in ihrer unteren Position, so wird der Linsenträger 5 bei laufenden Förderbändern 6, 6' durch den Haltearm 25 angehalten, während der Linsenträger 5 mit der Fördereinrichtung 4 bzw. den Förderbändern 6, 6' weitergefördert wird, wenn die Führungseinrichtung angehoben ist.

Die Querförderung der ophthalmischen Linsen 2 bzw. Linsenträger 5 erfolgt im Falle der Schiebeeinrichtung 20 auf identische Weise wie im Falle der Schiebeeinrichtung 10 (s.o.), also durch Linearbewegung bzw. eine Linearführung und/oder einen Linearantrieb.

Ein besonderer Vorteil der Schiebeeinrichtung 20 bzw. insbesondere der vorzugsweise höhenverstellbaren Führungseinrichtung bzw. Gabel 21 der Schiebeeinrichtung 20 besteht darin, dass der Linsenträger 5 durch ein zügiges Hochfahren der Gabel 21 schneller die Schiebeeinrichtung 20 verlassen bzw. mit dem Förderband 6, 6' mitgeführt werden kann. Dadurch kann einem Stau von Linsenträgern 5 vorgebeugt bzw. ein höherer Durchsatz erzielt werden. Für die Querförderung der ophthalmischen Linsen 2 bzw. Linsenträger 5 von einer Transportspur T1, T2 zur anderen bleibt die Gabel 21 mit dem Linsenträger 5 immer auf dem Förderband 6, 6' bzw. der Zwischenplatte 9.

Die Führungseinrichtung bzw. Gabel 11, 21 der Schiebeeinrichtung 10, 20 ist vorzugsweise breiter als der Linsenträger 5, insbesondere um ein im Wesentlichen widerstandsloses Einfahren des Linsenträgers 5 in bzw. Durchfahren des Linsenträgers 5 durch die Gabel 11, 21 zu gewährleisten. Zweckmäßigerweise ist die Breite der Gabel 11, 21 insbesondere derart gewählt, dass der Linsenträger 5 bei dessen Mitnahme bzw. Querförderung durch die Gabel 11, 21 besonders zuverlässig, insbesondere mit wenig Spiel, gezielt von einer Transportspur T1, T2 zur anderen bzw. von einem Förderband 6, 6' zum anderen geschoben werden kann.

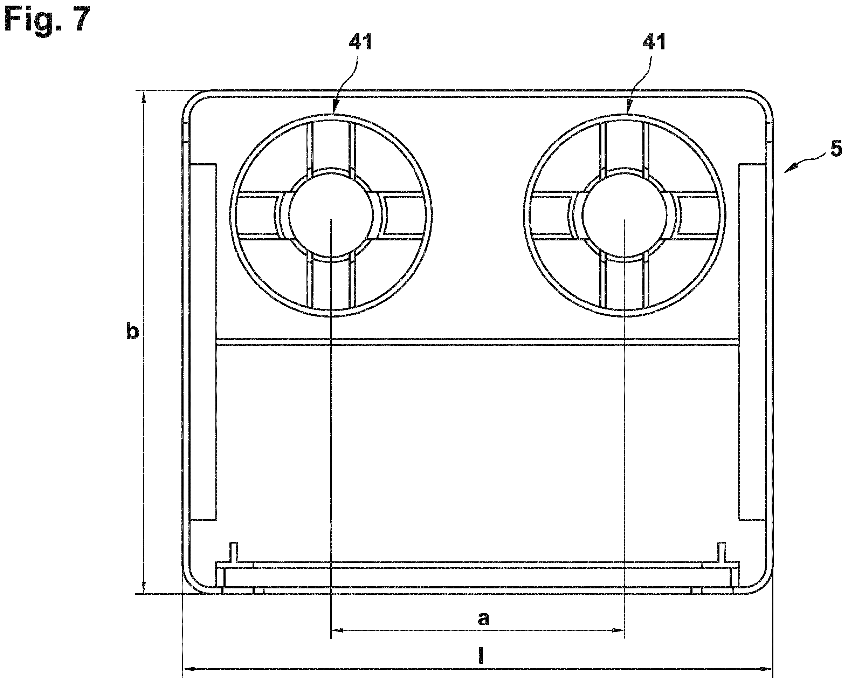

Fig. 7 zeigt in einer schematischen Draufsicht eine bevorzugte Ausführungsform eines Linsenträgers 5 zur Aufnahme von mindestens einer, beim Darstellungsbeispiel insbesondere zwei, ophthalmischen Linsen 2.

Vorzugsweise werden zwei zu bearbeitende ophthalmische Linsen 2 bzw. ein Linsenpaar von einem Linsenträger 5 aufgenommen, wie es bei der Linsen- oder Brillenglasfertigung üblich ist.

Der Linsenträger 5 weist vorzugsweise zwei Aufnahmeplätze 41, insbesondere zur Aufnahme von ophthalmischen Linsen 2, auf. Die Aufnahmeplätze sind insbesondere derart gestaltet sind, dass ein Verrutschen der ophthalmischen Linsen 2, insbesondere beim Fördern und/oder Stoppen der Linsenträger 5, vermieden werden kann. Dies erlaubt insbesondere, dass die ophthalmischen Linsen 2 in ihrer räumlichen Position auf dem Linsenträger 5 besonders stabil bleiben und daher das Be- und Entladen, insbesondere im Haltebereich der Bearbeitungseinrichtungen 3, besonders zuverlässig erfolgen kann.

Vorzugsweise ist der Abstand der ophthalmischen Linsen 2 bzw. der Aufnahmeplätze 41 innerhalb eines Linsenträgers 5 im Darstellungsbeispiel zumindest im Wesentlichen genauso groß wie der Abstand einer ophthalmischen Linse 2 bzw. eines Aufnahmeplatzes 41 in einem Linsenträger 5 zu der benachbarten ophthalmischen Linse 2 bzw. zu dem benachbarten Aufnahmeplatz 41 in einem unmittelbar benachbarten Linsenträger 5. Dies vereinfacht die Handhabung bzw. Positionierung der ophthalmischen Linsen 2, insbesondere auf der Transportspur T1 an den Bearbeitungseinrichtungen 3 zur Be- und Entladung der Bearbeitungseinrichtungen 3 mit ophthalmischen Linsen 2.

Der Abstand a zwischen den Mittelpunkten der Aufnahmeplätze 41 des Linsenträgers 5 beträgt im dargestellten Ausführungsbeispiel ca. 130 mm mit einer Fehlertoleranz von 10 mm. Die Länge l des Linsenträgers 5 beträgt vorzugsweise das Doppelte des Abstandes a, d.h. ca. 260 mm mit einer Fehlertoleranz von 10 mm. Die Breite b des Linsenträgers 5 beträgt vorzugsweise ca. 220 mm mit einer Fehlertoleranz von 10 mm.

Ein weiterer, auch unabhängig realisierbarer Aspekt der vorliegenden Erfindung besteht darin, dass die Breite der Fördereinrichtung 4 bzw. der Förderbänder 6, 6' vorzugsweise durch die Breite des Linsenträgers 5, insbesondere durch die Anzahl der Transportspuren, determiniert ist.

Vorzugsweise entspricht die Breite einer Transportspur T1, T2 mindestens der Breite b eines Linsenträgers 5.

Weiter entspricht die Breite der Förderbänder 6, 6' vorzugsweise jeweils der Anzahl der Transportspuren pro Förderband. Mit anderen Worten entspricht die Breite eines Förderbandes vorzugsweise mindestens der Anzahl an Transportspuren multipliziert mit der Breite b des Linsenträgers 5.

Die Breite der Förderbänder 6, 6' beträgt im Ausführungsbeispiel jeweils mindestens die Breite b eines Linsenträgers 5, d.h. mindestens ca. 220 mm unter Berücksichtigung der Fehlertoleranz.

Die Breite der Fördereinrichtung 4 entspricht vorzugsweise mindestens der Anzahl an Transportspuren multipliziert mit der Breite b des Linsenträgers 5.

Im Falle von mehreren, also mindestens zwei Förderbändern 6, 6', entspricht die Breite der Fördereinrichtung 4 vorzugsweise mindestens der Anzahl der Förderbänder 6, 6' multipliziert mit der Breite b des Linsenträgers 5, d.h. vorzugsweise mindestens dem Vielfachen von ca. 220 mm unter Berücksichtigung der Fehlertoleranz.

Im Falle von zueinander beabstandeten Förderbändern 6, 6' entspricht die Breite der Fördereinrichtung 4 vorzugsweise mindestens der Anzahl an Transportspuren T1, T2 multipliziert mit der Breite b des Linsenträgers 5, insbesondere zuzüglich des Abstandes zwischen den Förderbändern 6, 6'.

Vorschlagsgemäß beträgt die Breite der Fördereinrichtung 4 vorzugsweise mindestens das Doppelte der Breite b des Linsenträgers 5, im dargestellten Ausführungsbeispiel also mindestens ca. 440 mm unter Berücksichtigung der Fehlertoleranz, insbesondere zuzüglich des Abstandes zwischen den Förderbändern 6, 6'.

Im Falle der Ausführungsform mit zwei Transportspuren T1, T2 auf einem gemeinsamen Förderband 6 entspricht die Breite des Förderbandes 6 der Breite der Fördereinrichtung 4 und beträgt vorzugsweise mindestens das Doppelte der Breite des Linsenträgers 5.

Neben dem genannten Ausführungsbeispiel des Linsenträgers 5 sind auch schmalere Varianten des Linsenträgers 5 denkbar, die dem Fachmann allgemein bekannt sind. Diese können bspw. eine Länge l zwischen 245 und 265 mm, insbesondere ca. 250 mm, eine Breite b zwischen 120 und 130 mm, insbesondere ca. 125 mm, und/oder einen Abstand a der Aufnahmeplätze 41 zwischen 110 und 135 mm, insbesondere ca. 130 mm, aufweisen. Andere Abmessungen sind natürlich auch denkbar.

Weiter können auch an sich bekannte, insbesondere stapelbare Ausführungsformen, z.B. Double Trays, der Linsenträger 5 verwendet werden. Im Falle von übereinander gestapelten Linsenträgern 5 ist es zweckmäßig, deren Höhe zu berücksichtigen. Dies ist bspw. möglich durch Herauf- oder Herabsetzen der Fördereinrichtung 4 bzw. der Bearbeitungseinrichtungen 3 um die jeweilige Höhe des zusätzlichen Linsenträgers 5.

Fig. 8 zeigt in einer ausschnittsweisen, schematischen Draufsicht eine weitere Ausführungsform der vorschlagsgemäßen Anlage 1, wie bereits erwähnt. Nachfolgend werden insbesondere wesentliche Unterschiede gegenüber den bereits beschriebenen Ausführungsformen und -varianten erläutert, wobei die bisherigen Ausführungen und Erläuterungen insbesondere entsprechend oder ergänzend gelten, auch wenn eine wiederholte Beschreibung weggelassen wird.

Bei der Ausführungsform gemäß Fig. 8 bildet das (gemeinsame) Förderband 6 vorzugsweise beide Transportspuren T1, T2, also die erste Transportspur T1 und die zweite Transportspur T2.

Die Fördereinrichtung 4 bzw. das Förderband 6 weist vorzugsweise einen Zwischenbereich Z zwischen den beiden Transportspuren T1, T2 auf, um bedarfsweise den Linsenträger 5 in einer Zwischenposition ZP zwischen den beiden Transportspuren T1 und T2 parken zu können.

Anstelle eines Förderbandes 6, das die beiden Transportspuren T1, T2 und den Zwischenbereich Z bildet, können hierfür auch mehrere entsprechend gekoppelte Förderbänder 6 eingesetzt werden.

Die Anlage 1 bzw. die Fördereinrichtung 4 weist vorzugsweise wiederum Stoppeinrichtungen 31, 31a, 31b auf, um den Linsenträger 5 an gewünschten Stellen auf der Fördereinrichtung 4 bzw. dem Förderband 6 bzw. auf den Transportspuren T1 und T2, insbesondere vor den Bearbeitungseinrichtungen 3 und/oder vor bzw. an den Schiebeeinrichtungen 10 und/oder im Zwischenbereich Z bzw. an den Zwischenpositionen ZP - insbesondere auch bei weiterlaufendem Förderband 6 - bedarfsweise anhalten zu können.

Die Stoppeinrichtungen 31 können bspw. seitlich am Förderband 6 bzw. seitlich außen an den Transportspuren T1 bzw. T2 angeordnet sein.

Die Stoppeinrichtungen 31 können bspw. auch einen Linsenträger 5 im Zwischenbereich Z bedarfsweise anhalten oder stoppen und bei seitlicher Anordnung bspw. brückenartig ausgebildet sein, um entsprechend im Zwischenbereich Z wirken zu können. Jedoch sind auch andere konstruktive Lösungen möglich. Bspw. können die Stoppeinrichtungen 31 auch nur im Zwischenbereich Z oder darüber angeordnet sein, wie beispielhaft durch die Bezugszeichen 31a angedeutet. In diesem Fall können die Stoppeinrichtungen 31a auch stationär bzw. fest ausgebildet sein oder alternativ auch aus der Bewegungsbahn wegbewegbar sein, um ggf. auch eine Weiterförderung der Linsenträger 5 im Zwischenbereich Z zu ermöglichen, also quasi eine zusätzliche Transportspur zwischen den beiden Transportspuren T1 und T2 zu bilden.

Alternativ oder zusätzlich können auch im Bereich der Transportspuren T1, T2, insbesondere im Bereich der ersten Transportspur T1, Stoppeinrichtungen 31 vorgesehen sein, die primär oder ausschließlich oberhalb des Förderbands 6 bzw. der jeweiligen Transportspur T1 bzw. T2 angeordnet sind, um insbesondere die Bearbeitungseinrichtungen 3 möglichst nahe an dem Förderband 6 bzw. der ersten Transportspur T1 positionieren zu können, ohne dass die Stoppeinrichtung 31 zwischen der Bearbeitungseinrichtung 3 und dem Förderband 6 bzw. der ersten Transportspur T1 angeordnet werden muss. Diese Stoppeinrichtungen 31b sind dann vorzugsweise aus der Bewegungsbahn bewegbar, bspw. durch Linearbewegung und/oder Schwenken, um eine Förderung der Linsenträger 5 auf der entsprechenden Transportspur, hier der ersten Transportspur T1, in die Förderrichtung F1, je nach Bedarf freizugeben oder der Linsenträger 5 wahlweise zu stoppen, insbesondere vor der jeweiligen Bearbeitungseinrichtung 3.

Optional kann eine Schiebeeinrichtung 10 auch mit zugeordneten Stoppeinrichtungen 31, 31a, 31b zusammenwirken. In diesem Fall können die Stoppeinrichtungen 31 auch einen Teil der Schiebeeinrichtung 10 bzw. einen Teil der Führungseinrichtung der Schiebeeinrichtung 10 bilden. Dies ist beispielhaft in Fig. 8 für die rechte Schiebeeinrichtung 10 angedeutet.

Beim Darstellungsbeispiel befindet sich der Linsenträger 5 auf der zweiten Transportspur T2 an der Schiebeeinrichtung 10 und wird von der der zweiten Transportspur T2 zugeordneten Stoppeinrichtung 31 in Förderrichtung F2 gehalten bzw. gestoppt. Damit führt die Stoppeinrichtung 31 den Linsenträger 5 in Förderrichtung F2, wenn der Linsenträger 5 von der Schiebeeinrichtung 10 quer verschoben wird.

Die rechte Schiebeeinrichtung 10 führt in diesem Fall über ihre Führungseinrichtung, hier die Seitenelemente 11a und 11b den Linsenträger 5 seitlich, sodass eine sichere und definierte Führung des Linsenträgers 5 beim Querverschieben erfolgt.

In dem optionalen Zwischenbereich Z schließt sich beim Darstellungsbeispiel dann die vorzugsweise stationäre Stoppeinrichtung 31a an, um den Linsenträger 5 gegen eine Weiterförderung in die Förderrichtung F1, F2 bei Weiterlaufen des Förderbands 6 zurück zu halten bzw. an seiner vorlaufenden Seite bei der Querförderung zu führen.

Schließlich kann bei weiterer Verschiebung auf die erste Transportspur T1 die gegenüberliegend angeordnete Stoppeinrichtung 31 dann bei Bedarf den Linsenträger 5 wieder in Förderrichtung F1 halten und führen, sodass beim Darstellungsbeispiel auch die rechte Schiebeeinrichtung 10 eine sichere Führung des Linsenträgers 5 beim Querverschieben sowohl in Förderrichtung F1 als auch in seitlicher Richtung durch Zusammenwirkung mit den Stoppeinrichtungen 31, 31a ermöglicht bzw. gewährleistet.

Jedoch sind auch andere konstruktive Lösungen möglich.

Bei der in Fig. 8 linken Schiebeeinrichtung 10 ist angedeutet, dass deren insbesondere U-förmige Führungseinrichtung oder Gabel 11 keine Stoppeinrichtung 31 oder 31a benötigt. In diesem Fall ist die Führungseinrichtung bzw. Gabel 11 vorzugsweise vertikal anhebbar, um den Linsenträger 5 zur Weiterförderung wieder freigeben zu können, so wie beispielhaft schon für die Schiebeeinrichtung 20 anhand von Fig. 5 und 6 beschrieben.

Einzelne Aspekte und Merkmale der verschiedenen Ausführungsformen und -varianten können auch beliebig miteinander kombiniert, aber auch unabhängig voneinander realisiert werden.

Die Führungseinrichtung bzw. Gabel 11, 21 der Schiebeeinrichtung 10, 20 ist vorzugsweise U-förmig und/oder starr ausgebildet.

Die Seitenelemente 11a, 11b bzw. 21a, 21b können optional - insbesondere manuell oder motorisch - verstellbar und/oder an ihren freien Enden zur Bildung von Einlaufschrägen (wie insbesondere in Fig. 5 angedeutet) für den aufzunehmenden Linsenträger 5 aufgeweitet sein.

Generell ist anzumerken, dass die Anlage 1 bzw. Fördereinrichtung 4 vorzugsweise eine durchgehende erste Transportspur T1 vor den Bearbeitungseinrichtungen 3 bildet oder aufweist, wobei die Bearbeitungseinrichtungen 3 jeweils eine eigene Manipulationseinrichtung 3b aufweisen, um Linsen 2 von der ersten Transportspur T1 zur Bearbeitung aufnehmen und nach der Bearbeitung insbesondere wieder an diese abzugeben.

Die Schiebeeinrichtung 10, 20 ist vorzugsweise derart ausgebildet, um den jeweiligen Linsenträger 5 quer zur Förderrichtung F1, F2 insbesondere von einer Transportspur T1, T2 zur anderen zu schieben oder zu ziehen und dabei den Linsenträger 5 sowohl in Förderrichtung F1, F2 als auch quer dazu zu führen.

Die Linsenträger 5 werden bei der Querverschiebung R1, R2 vorzugsweise ausschließlich durch primär seitliche Krafteinwirkung ohne aktives Anheben von der Schiebeeinrichtung 10, 20 geschoben oder gezogen.

Die Linsen 2 werden vorzugsweise über Linsenträger 5 den Bearbeitungseinrichtungen 3 zugefördert und/oder von diesen wieder weggefördert.

Die Bearbeitungseinrichtungen 3 bearbeiten die Linsen 2 besonders bevorzugt nur in der Reihenfolge der Zuförderung der Linsen 2 bzw. Linsenträger 5, insbesondere nur über die erste Transportspur T1.

Jedoch ist es auch möglich, dass eine Bearbeitungseinrichtung 3 bzw. die Fördereinrichtung 4 einen auf der ersten Transportspur T1 ankommenden Linsenträger 5 vor der Bearbeitungseinrichtung 3 nicht anhält bzw. stoppt, sondern in der Förderrichtung F1 weiterbewegen lässt. Dies ist bspw. möglich, um einen optimierten Ablauf zu realisieren, oder bspw. erforderlich, wenn bspw. die Bearbeitungseinrichtung 3 ausgefallen ist.

Ein Aspekt der vorliegenden Erfindung liegt auch darin, dass die Schiebeeinrichtung 10, 20 zur Bearbeitung ophthalmischer Linsen 2 eingesetzt wird, um Linsenträger 5 zwischen Transportspuren T1, T2 und einen optionalen Zwischenbereich Z auf einfache Weise schnell und sicher zu wechseln.

### Bezugszeichenliste:

- 1: Anlage
- 2: Linse
- 3: Bearbeitungseinrichtung
- 3a: Gehäuse
- 3b: Manipulationseinrichtung
- 4: Fördereinrichtung
- 5: Linsenträger
- 6: Förderband
- 6': Förderband
- 7: Antriebssystem
- 7': Antriebssystem
- 8: Leitstege
- 9: Zwischenplatte
- 9a: Anschrägung
- 9b: Anschrägung
- 10: Schiebeeinrichtung
- 11a: Seitenelement
- 11b: Seitenelement
- 12: Haltefläche
- 13: Stopper
- 13a: Kolben
- 14: Befestigungswinkel
- 15: Mitnehmer
- 16: Schlitten
- 17: Transferzylinder
- 18: Träger
- 18a: Unterseite
- 19: Schiene
- 20: Schiebeeinrichtung
- 21: Gabel
- 21a: Seitenelement
- 21b: Seitenelement
- 22: Haltefläche
- 23: Hubzylinder
- 24: obere Haltefläche
- 25: Haltearm

- 31: Stoppeinrichtung
- 31a: Stoppeinrichtung
- 31b: Stoppeinrichtung
- 32: Sensor

- 41: Aufnahmeplatz
- 42: Profil

- F1: Fördereinrichtung
- F2: Fördereinrichtung
- H: Pfeil
- R1: Querförderrichtung
- R2: Querförderrichtung
- T1: erste Transportspur
- T2: zweite Transportspur
- Z: Zwischenbereich
- ZP: Zwischenposition
- a: Abstand
- b: Breite
- l: Länge

## Patentansprüche

1. Anlage (1) zur Bearbeitung ophthalmischer Linsen (2), insbesondere für Brillen,
mit mehreren separaten Bearbeitungseinrichtungen (3) mit eigenem Gehäuse (3a) zur unabhängigen Bearbeitung der Linsen (2),
mit einer die Bearbeitungseinrichtungen (3) miteinander verbindenden Fördereinrichtung (4) zum Transport von Linsenträgern (5) mit den Linsen (2) zu und von den Bearbeitungseinrichtungen (3),
wobei die Fördereinrichtung (4) mindestens zwei Transportspuren (T1, T2) aufweist,
wobei eine erste Transportspur (T1) zur Förderung der Linsenträger (5) von einer Bearbeitungseinrichtung (3) zur nächsten und eine zweite, insbesondere parallele, Transportspur (T2) zur parallelen Förderung der Linsenträger (5) dient;
mit ein oder mehreren Transfereinrichtungen zum bedarfsweisen Transport bzw. Wechsel der Linsenträger (5) von einer Transportspur (T1, T2) zur anderen quer zu deren Förderrichtung (F1, F2),
**dadurch gekennzeichnet,**
**dass** die Fördereinrichtung (4) ein gemeinsames Förderband (6) mit zwei Transportspuren (T1, T2) und einen dazwischen angeordneten Zwischenbereich (Z) für die Linsenträger (5) aufweist, sodass ein Linsenträger (5) bedarfsweise zwischen den Transportspuren (T1, T2) auf dem Förderband (6) positioniert werden kann, und
**dass** die Fördereinrichtung (4) eine Stoppeinrichtung (31, 31a, 31b) aufweist, die dazu ausgebildet ist, einen Linsenträger (5) an gewünschten Stellen im Zwischenbereich (Z) bei weiterlaufendem Förderband (6) anhalten zu können.

2. Anlage nach Anspruch 1, **dadurch gekennzeichnet, dass** die Fördereinrichtung (4) eine durchgehende erste Transportspur (T1) vor den Bearbeitungseinrichtungen (3) bildet, wobei die Bearbeitungseinrichtungen (3) jeweils eine eigene Manipulationseinrichtung (3b) aufweisen, um Linsen (2) von der ersten Transportspur (T1) bzw. dortigen Linsenträgern (5) zur Bearbeitung aufzunehmen und/oder an diese bzw. dortige Linsenträger (5) abzugeben.

3. Anlage nach einem der vorhergehenden Ansprüche, **dadurch gekennzeichnet, dass** die Transfereinrichtung als Schiebeeinrichtung (10, 20) ausgebildet ist, die den jeweiligen Linsenträger (5) quer zur Förderrichtung (F1, F2) von einer Transportspur (T1, T2) zur anderen schiebt oder zieht und dabei den Linsenträger (5) sowohl in Förderrichtung (F1, F2) als quer dazu führt, vorzugsweise
wobei die Schiebeeinrichtung (10, 20) eine vertikal und/oder quer zur Förderrichtung (F1, F2) zur seitlichen Führung des jeweiligen Linsenträgers (5) verfahrbare Führungseinrichtung bzw. Gabel (11, 21) aufweist, und/oder
wobei der Schiebeeinrichtung (10, 20) eine zwischen den Transportspuren (T1, T2) angeordnete Zwischenposition (ZP) zugeordnet ist.

4. Anlage nach Anspruch 3, **dadurch gekennzeichnet, dass** die Schiebeeinrichtung (10, 20) einen Linearantrieb zur Querförderung der Führungseinrichtung bzw. Gabel (11, 21) aufweist.

5. Anlage nach Anspruch 3 oder 4, **dadurch gekennzeichnet, dass** die Schiebeeinrichtung (10, 20) zur hydraulischen oder pneumatischen Verschiebung der Linsenträger (5) zum Wechseln der Transportspur (T1, T2) ausgebildet ist.

6. Anlage nach einem der vorhergehenden Ansprüche, **dadurch gekennzeichnet, dass** Leitstege (8), insbesondere zur Führung der Linsenträger (5) parallel zur Förderrichtung (F1, F2), randseitig der Transportspuren (T1, T2) vorgesehen sind, insbesondere wobei im Bereich der Schiebeeinrichtung (10, 20) und/oder im Bereich der Zwischenposition (ZP) Aussparungen der Leitstege (8) vorgesehen sind.

7. Verfahren zur Bearbeitung ophthalmischer Linsen (2), insbesondere für Brillen,
wobei die Linsen (2) in Linsenträgern (5) mittels einer Fördereinrichtung (4) zu separaten Bearbeitungseinrichtungen (3) mit eigenen Gehäusen (3a) gefördert werden,
wobei die Fördereinrichtung (4) mindestens zwei Transportspuren (T1, T2) bildet, zwischen denen die Linsenträger (5) mittels Transfereinrichtungen wechseln können, so dass die Reihenfolge der Zuförderung der Linsenträger (5) zu den Bearbeitungseinrichtungen (3) variiert werden kann,
insbesondere wobei die Bearbeitungseinrichtungen (3) die Linsen (2) in der Reihenfolge der Zuförderung der Linsenträger (5) bearbeiten,
**dadurch gekennzeichnet,**
**dass** die Fördereinrichtung (4) ein gemeinsames Förderband (6) mit zwei Transportspuren (T1, T2) und einen dazwischen angeordneten Zwischenbereich (Z) für die Linsenträger (5) bildet, sodass ein Linsenträger (5) bedarfsweise zwischen den Transportspuren (T1, T2) auf dem Förderband (6) positioniert werden kann, und
**dass** die Fördereinrichtung (4) eine Stoppeinrichtung (31, 31a, 31b) aufweist, die einen Linsenträger (5) an gewünschten Stellen im Zwischenbereich (Z) bei weiterlaufendem Förderband (6) anhält.

8. Verfahren nach Anspruch 7, **dadurch gekennzeichnet, dass** die durchgehende bzw. erste Transportspur (T1, T2) durch ein durchgehendes Förderband (6) gebildet wird, und/oder dass die Fördereinrichtung (4) und/oder die durchgehende Transportspur (T1) bzw. deren Förderband (6) zentral und/oder unabhängig von den Bearbeitungseinrichtungen (3) gesteuert wird bzw. werden oder umgekehrt.

9. Verfahren nach Anspruch 7 oder 8, **dadurch gekennzeichnet, dass** die Fördereinrichtung (4) eine durchgehende Transportspur (T1) vor den separaten Bearbeitungseinrichtungen (3) zur Zuförderung der Linsenträger (5) zu den Bearbeitungseinrichtungen (3) bildet, wobei die Bearbeitungseinrichtungen (3) die zu bearbeitenden Linsen (2) - vorzugsweise ausschließlich - von Linsenträgern (5) auf dieser Transportspur (T1) aufnehmen, und/oder
dass die Linsenträger (5) zum Wechseln der Transportspur (T1, T2) - vorzugsweise ausschließlich - durch primär seitliche Krafteinwirkung ohne aktives Anheben von einer Transportspur (T1, T2) zur anderen Transportspur (T1, T2) geschoben oder gezogen werden.

10. Verfahren nach einem der Ansprüche 7 bis 9, **dadurch gekennzeichnet, dass** die Bearbeitungseinrichtungen (3) die zu bearbeitenden Linsen (2) jeweils mit einer eigenen Manipulationseinrichtung (3b) dem jeweiligen Linsenträger (5) entnehmen.

11. Verfahren nach einem der Ansprüche 7 bis 10, **dadurch gekennzeichnet, dass** die Linsenträger (5) zum Wechsel der Transportspur (T1, T2) jeweils mittels einer Schiebeeinrichtung (10, 20) quer zur Förderrichtung (F1, F2) verschoben werden, wobei die Linsenträger (5) dabei seitlich bzw. in Querrichtung (R1, R2) und in Förderrichtung (F1, F2) geführt werden.

12. Verfahren nach einem der Ansprüche 7 bis 11, **dadurch gekennzeichnet, dass** eine zentrale Steuerung oder die Fördereinrichtung (4) Stoppeinrichtungen (31, 31b) zur Positionierung der Linsenträger (5) vor den Bearbeitungseinrichtungen (3) steuert.

13. Verfahren nach einem der Ansprüche 7 bis 12, **dadurch gekennzeichnet, dass** die Linsenträger (5) zum Wechseln der Transportspur (T1, T2) hydraulisch oder pneumatisch von einer Transportspur (T1, T2) zur anderen Transportspur (T1, T2) geschoben oder gezogen werden.

14. Verwendung einer Schiebeeinrichtung (10, 20) zum Querfördern eines Linsenträgers (5) bei der Bearbeitung von ophthalmischen Linsen (2),
**dadurch gekennzeichnet,**
**dass** der Linsenträger (5) zum Wechsel einer Transportspur (T1, T2) mittels einer Schiebeeinrichtung (10, 20) quer zur Förderrichtung (F1, F2) verschoben wird, wobei der Linsenträger (5) dabei seitlich bzw. in Querrichtung (R1, R2) und in Förderrichtung (F1, F2) geführt und ohne aktives Anheben verschoben wird.

## Claims

1. Installation (1) for processing ophthalmic lenses (2), in particular for spectacles, with a plurality of separate processing devices (3) with own housing (3a) for independent processing of the lenses (2),
with a conveying device (4) connecting the processing devices (3) to one another for transporting lens carriers (5) with the lenses (2) to and from the processing devices (3),
wherein the conveying device (4) comprises at least two transport tracks (T1, T2),
wherein a first transport track (T1) serves to convey the lens carriers (5) from one processing device (3) to the next and a second, in particular parallel, transport track (T2) serves to convey the lens carriers (5) in parallel to the first transport track (T1);
with one or more transfer devices for transporting and/or changing the lens carriers (5) as required from one transport track (T1, T2) to the other transversely to their direction of conveyance (F1, F2),
**characterized**
**in that** the conveying device (4) comprises a common conveyor belt (6) with two transport tracks (T1, T2) and an intermediate area (Z) arranged therebetween for the lens carriers (5), so that a lens carrier (5) can be positioned on the conveyor belt (6) between the transport tracks (T1, T2) as required, and
**in that** the conveying device (4) comprises a stopping device (31, 31a, 31b) which is configured to be able to stop a lens carrier (5) at desired locations in the intermediate area (Z) while the conveyor belt (6) continues to run.

2. Installation according to claim 1, **characterized in that** the conveying device (4) forms a continuous first transport track (T1) in front of the processing devices (3), wherein the processing devices (3) each comprise an own manipulation device (3b) in order to pick up lenses (2) from the first transport track (T1) and/or from lens carriers (5) there for processing and/or to deliver them to those and/or to lens carriers (5) there.

3. Installation according to one of the preceding claims, **characterized in that** the transfer device is designed as a pushing device (10, 20) which pushes or pulls the respective lens carrier (5) transversely to the direction of conveyance (F1, F2) from one transport track (T1, T2) to the other and thereby guides the lens carrier (5) both in the direction of conveyance (F1, F2) and transversely thereto, preferably
wherein the pushing device (10, 20) comprises a guide device and/or fork (11, 21) which is moveable vertically and/or transversely to the direction of conveyance (F1, F2) for lateral guidance of the respective lens carrier (5), and/or
wherein the pushing device (10, 20) is assigned an intermediate position (ZP) arranged between the transport tracks (T1, T2).

4. Installation according to claim 3, **characterized in that** the pushing device (10, 20) comprises a linear drive for transverse conveyance of the guide device and/or fork (11, 21).

5. Installation according to claim 3 or 4, **characterized in that** the pushing device (10, 20) is designed for hydraulic or pneumatic displacement of the lens carriers (5) for changing the transport track (T1, T2).

6. Installation according to one of the preceding claims, **characterized in that** guide bars (8), in particular for guiding the lens carriers (5) parallel to the direction of conveyance (F1, F2), are provided at the edges of the transport tracks (T1, T2), in particular wherein recesses of the guide bars (8) are provided in the region of the pushing device (10, 20) and/or in the region of the intermediate position (ZP).

7. Method for processing ophthalmic lenses (2), in particular for spectacles,
wherein the lenses (2) are conveyed in lens carriers (5) by means of a conveying device (4) to separate processing devices (3) with own housings (3a),
wherein the conveying device (4) forms at least two transport tracks (T1, T2) between which the lens carriers (5) can change by means of transfer devices, so that the order of feeding the lens carriers (5) to the processing devices (3) can be varied,
in particular wherein the processing devices (3) process the lenses (2) in the order in which the lens carriers (5) are fed in,
**characterized**
**in that** the conveying device (4) forms a common conveyor belt (6) with two transport tracks (T1, T2) and an intermediate area (Z) arranged therebetween for the lens carriers (5), so that a lens carrier (5) can be positioned on the conveyor belt (6) between the transport tracks (T1, T2) as required, and
**in that** the conveying device (4) comprises a stopping device (31, 31a, 31b) which stops a lens carrier (5) at desired locations in the intermediate area (Z) while the conveyor belt (6) continues to run.

8. Method according to claim 7, **characterized in that** the continuous and/or first transport track (T1, T2) is formed by a continuous conveyor belt (6), and/or
**in that** the conveying device (4) and/or the continuous transport track (T1) and/or its conveyor belt (6) is/are controlled centrally and/or independently of the processing devices (3) or vice versa.

9. Method according to claim 7 or 8, **characterized in that** the conveying device (4) forms a continuous transport track (T1) in front of the separate processing devices (3) for feeding the lens carriers (5) to the processing devices (3), wherein the processing devices (3) receive the lenses (2) to be processed - preferably exclusively - from lens carriers (5) on this transport track (T1), and/or
**in that**, for changing the transport track (T1, T2), the lens carriers (5) are pushed or pulled from one transport track (T1, T2) to the other transport track (T1, T2) - preferably exclusively - by the action of primarily lateral force without active lifting.

10. Method according to one of the claims 7 to 9, **characterized in that** the processing devices (3) each remove the lenses (2) to be processed from the respective lens carrier (5) with an own manipulation device (3b).

11. Method according to one of the claims 7 to 10, **characterized in that**, for changing the transport track (T1, T2), the lens carriers (5) are each displaced transversely to the direction of conveyance (F1, F2) by means of a pushing device (10, 20), the lens carriers (5) in the process being guided laterally and/or in the transverse direction (R1, R2) and in the direction of conveyance (F1, F2).

12. Method according to one of the claims 7 to 11, **characterized in that** a central control or the conveying device (4) controls stopping devices (31, 31b) for positioning the lens carriers (5) in front of the processing devices (3).

13. Method according to one of the claims 7 to 12, **characterized in that**, for changing the transport track (T1, T2), the lens carriers (5) are pushed or pulled hydraulically or pneumatically from one transport track (T1, T2) to the other transport track (T1, T2).

14. Use of a pushing device (10, 20) for transversely conveying a lens carrier (5) during the processing of ophthalmic lenses (2),
**characterized**
**in that** the lens carrier (5) is displaced transversely to the direction of conveyance (F1, F2) by means of a pushing device (10, 20) in order to change a transport track (T1, T2), the lens carrier (5) in the process being guided laterally and/or in the transverse direction (R1, R2) and in the direction of conveyance (F1, F2) and being displaced without being actively lifted.

## Revendications

1. Installation (1) pour le traitement de lentilles ophtalmiques (2), en particulier pour des lunettes,
comprenant plusieurs dispositifs de traitement (3) séparés avec un boîtier (3a) propre pour le traitement indépendant des lentilles (2),
comprenant un dispositif de transport (4) reliant les dispositifs de traitement (3) entre eux pour le transport de supports de lentilles (5) avec les lentilles (2) vers et depuis les dispositifs de traitement (3),
le dispositif de transport (4) présentant au moins deux voies de transport (T1, T2),
une première voie de transport (T1) servant au transport des supports de lentilles (5) d'un dispositif de traitement (3) au suivant et une deuxième voie de transport (T2), en particulier parallèle, servant au transport parallèle des supports de lentilles (5);
comprenant un ou plusieurs dispositifs de transfert pour le transport et/ou le changement, selon les besoins, des supports de lentilles (5) d'une voie de transport (T1, T2) à l'autre transversalement à leur direction de transport (F1, F2),
**caractérisée**
**en ce que** le dispositif de transport (4) présente une bande transporteuse commune (6) avec deux voies de transport (T1, T2) et une zone intermédiaire (Z) disposée entre elles pour les supports de lentilles (5), de sorte qu'un support de lentilles (5) peut être positionné selon les besoins entre les voies de transport (T1, T2) sur la bande transporteuse (6), et
**en ce que** le dispositif de transport (4) présente un dispositif d'arrêt (31, 31a, 31b) qui est réalisé pour pouvoir arrêter un support de lentilles (5) à des endroits souhaités dans la zone intermédiaire (Z) lorsque la bande transporteuse (6) continue à avancer.

2. Installation selon la revendication 1, **caractérisée en ce que** le dispositif de transport (4) forme une première voie de transport continue (T1) devant les dispositifs de traitement (3), les dispositifs de traitement (3) présentant à chaque fois un dispositif de manipulation propre (3b) pour recevoir des lentilles (2) de la première voie de transport (T1) et/ou des supports de lentilles (5) situés à cet endroit pour le traitement et/ou les délivrer à celle-ci et/ou à des supports de lentilles (5) situés à cet endroit.

3. Installation selon l'une quelconque des revendications précédentes, **caractérisée en ce que** le dispositif de transfert est réalisé sous forme de dispositif de poussée (10, 20) qui pousse ou tire le support de lentilles respectif (5) transversalement à la direction de transport (F1, F2) d'une voie de transport (T1, T2) à l'autre et guide ainsi le support de lentilles (5) à la fois dans la direction de transport (F1, F2) et transversalement à celle-ci, de préférence
le dispositif de poussée (10, 20) présentant un dispositif de guidage et/ou une fourche (11, 21) déplaçable verticalement et/ou transversalement à la direction de transport (F1, F2) pour le guidage latéral du support de lentilles respectif (5), et/ou
le dispositif de poussée (10, 20) étant associé à une position intermédiaire (ZP) disposée entre les voies de transport (T1, T2).

4. Installation selon la revendication 3, **caractérisée en ce que** le dispositif de poussée (10, 20) présente un entraînement linéaire pour le transport transversal du dispositif de guidage et/ou de la fourche (11, 21).

5. Installation selon la revendication 3 ou 4, **caractérisée en ce que** le dispositif de poussée (10, 20) est réalisé pour le déplacement hydraulique ou pneumatique des supports de lentilles (5) pour le changement de la voie de transport (T1, T2).

6. Installation selon l'une quelconque des revendications précédentes, **caractérisée en ce que** des nervures de guidage (8), en particulier pour le guidage des supports de lentilles (5) parallèlement à la direction de transport (F1, F2), sont prévues du côté du bord des voies de transport (T1, T2), en particulier des évidements des nervures de guidage (8) étant prévus dans la région du dispositif de poussée (10, 20) et/ou dans la région de la position intermédiaire (ZP).

7. Procédé pour le traitement de lentilles ophtalmiques (2), en particulier pour des lunettes,
les lentilles (2) étant transportées dans des supports de lentilles (5) au moyen d'un dispositif de transport (4) vers des dispositifs de traitement (3) séparés avec des boîtiers (3a) propres,
le dispositif de transport (4) formant au moins deux voies de transport (T1, T2), entre lesquelles les supports de lentilles (5) peuvent changer au moyen de dispositifs de transfert, de sorte que l'ordre d'alimentation des supports de lentilles (5) vers les dispositifs de traitement (3) peut être modifié,
en particulier les dispositifs de traitement (3) traitant les lentilles (2) dans l'ordre d'alimentation des supports de lentilles (5),
**caractérisé**
**en ce que** le dispositif de transport (4) forme une bande transporteuse commune (6) avec deux voies de transport (T1, T2) et une zone intermédiaire (Z) disposée entre elles pour les supports de lentilles (5), de sorte qu'un support de lentilles (5) peut être positionné selon les besoins entre les voies de transport (T1, T2) sur la bande transporteuse (6), et
**en ce que** le dispositif de transport (4) présente un dispositif d'arrêt (31, 31a, 31b) qui arrête un support de lentilles (5) à des endroits souhaités dans la zone intermédiaire (Z) lorsque la bande transporteuse (6) continue à avancer.

8. Procédé selon la revendication 7, **caractérisé en ce que** la voie de transport (T1, T2) continue et/ou la première voie de transport (T1, T2) est formée par une bande transporteuse continue (6), et/ou
**en ce que** le dispositif de transport (4) et/ou la voie de transport continue (T1) et/ou sa bande transporteuse (6) est ou sont commandés de manière centrale et/ou indépendamment des dispositifs de traitement (3) ou inversement.

9. Procédé selon la revendication 7 ou 8, **caractérisé en ce que** le dispositif de transport (4) forme une voie de transport continue (T1) devant les dispositifs de traitement (3) séparés pour alimenter des supports de lentilles (5) vers les dispositifs de traitement (3), les dispositifs de traitement (3) recevant les lentilles (2) à traiter - de préférence exclusivement - de supports de lentilles (5) sur cette voie de transport (T1), et/ou
**en ce que** les supports de lentilles (5) sont poussés ou tirés pour le changement de la voie de transport (T1, T2) - de préférence exclusivement - par une force d'action principalement latérale sans soulèvement actif d'une voie de transport (T1, T2) à l'autre voie de transport (T1, T2).

10. Procédé selon l'une quelconque des revendications 7 à 9, **caractérisé en ce que** les dispositifs de traitement (3) prélèvent les lentilles à traiter (2) à chaque fois avec un dispositif de manipulation propre (3b) du support de lentilles respectif (5).

11. Procédé selon l'une quelconque des revendications 7 à 10, **caractérisé en ce que** les supports de lentilles (5) sont déplacés pour le changement de la voie de transport (T1, T2) à chaque fois au moyen d'un dispositif de poussée (10, 20) transversalement à la direction de transport (F1, F2), les supports de lentilles (5) étant guidés à cet effet latéralement et/ou dans la direction transversale (R1, R2) et dans la direction de transport (F1, F2).

12. Procédé selon l'une quelconque des revendications 7 à 11, **caractérisé en ce qu'**une commande centrale ou le dispositif de transport (4) commande des dispositifs d'arrêt (31, 31b) pour le positionnement des supports de lentilles (5) devant les dispositifs de traitement (3).

13. Procédé selon l'une quelconque des revendications 7 à 12, **caractérisé en ce que** les supports de lentilles (5) sont poussés ou tirés pour le changement de la voie de transport (T1, T2) hydrauliquement ou pneumatiquement d'une voie de transport (T1, T2) à l'autre voie de transport (T1, T2).

14. Utilisation d'un dispositif de poussée (10, 20) pour le transport transversal d'un support de lentilles (5) lors du traitement de lentilles ophtalmiques (2),
**caractérisée**
**en ce que** le support de lentilles (5) est déplacé pour le changement d'une voie de transport (T1, T2) au moyen d'un dispositif de poussée (10, 20) transversalement à la direction de transport (F1, F2), le support de lentilles (5) étant guidé à cet effet latéralement et/ou dans la direction transversale (R1, R2) et dans la direction de transport (F1, F2) et étant déplacé sans soulèvement actif.
